(19) Europäisches Patentamt
European Patent Office
Office européen des brevets

(11) **EP 4 654 460 A2**

(12) **EUROPÄISCHE PATENTANMELDUNG**

(43) Veröffentlichungstag:
26.11.2025  Patentblatt 2025/48

(21) Anmeldenummer: 25196823.6

(22) Anmeldetag: **10.01.2024**

(51) Internationale Patentklassifikation (IPC):
*H02P 25/064* [(2016.01)]

(52) Gemeinsame Patentklassifikation (CPC):
**H02K 41/031; B60L 13/03; H02K 11/215;**
**H02P 25/064;** B65G 54/02; H02K 2201/03;
H02K 2213/03; H02K 2213/12

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität:  **17.01.2023  DE 102023101017**

(62) Dokumentnummer(n) der früheren Anmeldung(en)
nach Art. 76 EPÜ:
**24700719.8 / 4 649 576**

(71) Anmelder: **Beckhoff Automation GmbH**
**33415 Verl (DE)**

(72) Erfinder:
• **ACHTERBERG, Jan**
**47249 Duisburg (DE)**
• **BETTENWORTH, Manuel**
**1130 Wien (AT)**

(74) Vertreter: **Patentanwaltskanzlei WILHELM &**
**BECK**
**Prinzenstraße 13**
**80639 München (DE)**

Bemerkungen:
Diese Anmeldung ist am 19-08-2025 als
Teilanmeldung zu der unter INID-Code 62 erwähnten
Anmeldung eingereicht worden.

(54) **LINEARES TRANSPORTSYSTEM**

(57)    Ein lineares Transportsystem weist in einem ersten Bereich zwischen zwei Motormodule 33 ein erster Spalt 51 mit einer ersten Spaltlänge $L_{S1}$ und in einem zweiten Bereich zwischen zwei Motormodule 33 ein zweiter Spalt 52 mit einer zweiten Spaltlänge $L_{S2}$ auf, wobei die erste Spaltlänge $L_{S1}$ und die zweite Spaltlänge $L_{S2}$ unterschiedlich sind, wobei eine Steuereinheit 3 eingerichtet ist, Steuerbefehle derart auszugeben, dass eine bewegliche Einheit 10 eine vorgegebene Bewegung entlang einer Führungsschiene 1 ausführt, um anhand der vorgegebenen Bewegung einbaubedingte Abweichungen von Spaltlängen $L_S$ zu erkennen und für die Ausgabe weiterer Steuerbefehle zu berücksichtigen.

EP 4 654 460 A2

**Beschreibung**

Die Erfindung betrifft ein lineares Transportsystem.

Aus dem Stand der Technik sind lineare Transportsysteme bekannt. Die Offenlegungsschrift DE 10 2012 204 919 A1 beschreibt beispielsweise ein lineares Transportsystem mit einer beweglichen Einheit, einer Führungsschiene zum Führen der beweglichen Einheit sowie einem Linearmotor zum Antreiben der beweglichen Einheit entlang der Führungsschiene, wobei der Linearmotor einen Stator und einen Läufer umfasst, wobei der Stator mehrere entlang der Führungsschiene stationär angeordnete Motormodule aufweist, welche jeweils mehrere Antriebsspulen aufweisen, wobei der Läufer an der beweglichen Einheit angeordnet ist und mehrere Magnete umfasst.

Ein solches lineares Transportsystem weist Motormodule entlang der Führungsschiene auf, wobei die komplette Führungsschiene mit daran angeordneten Motormodulen ausgestattet ist, die jeweils direkt aneinander angrenzen. Dies erfordert eine hohe Anzahl an Motormodulen, so dass ein Aufbau dieses linearen Transportsystems kosten und ressourcenintensiv ist. Dies ist insbesondere bei langen linearen Transportsystemen der Fall.

Es ist eine Aufgabe der Erfindung, ein kostengünstigeres und ressourcenschonenderes lineares Transportsystem bereitzustellen. Diese Aufgabe wird mit dem Gegenstand des unabhängigen Patentanspruchs gelöst. Vorteilhafte Ausgestaltungen sind in den abhängigen Patentansprüchen angegeben.

Ein lineares Transportsystem mit einer beweglichen Einheit, einer Führungsschiene zum Führen der beweglichen Einheit sowie einem Linearmotor zum Antreiben der beweglichen Einheit entlang der Führungsschiene. Der Linearmotor umfasst einen Stator und zumindest einen Läufer. Der Stator weist mehrere entlang der Führungsschiene stationär angeordnete Motormodule auf, welche jeweils mehrere Antriebsspulen aufweisen. Der Läufer ist an der beweglichen Einheit angeordnet und umfasst mehrere Magnete. Zwischen zumindest zwei der Motormodule ist ein Spalt ausgebildet. Die Motormodule weisen eine Motormodullänge auf, die einem Abstand zweier Antriebsspulenmittelpunkte multipliziert mit einer Anzahl der Antriebsspulen pro Motormodul entspricht. Hier können auch kleine Abweichungen vorliegen, so dass beispielsweise Einbautoleranzen ausgeglichen werden können. Der Läufer weist eine Läuferlänge auf, die einem Abstand zweier Magnetmittelpunkte multipliziert mit einer Anzahl der Magnete des Läufers entspricht. Auch hier können kleine Abweichungen vorliegen beispielsweise aufgrund von zusätzlichen Radien. Insbesondere können die Abstände zueinander in Beziehung stehen und dabei können, bis auf kleinere Abweichungen, die einbaubedingt möglich sind, die angegebenen Relationen eingehalten werden. Der Spalt weist eine Spaltlänge auf. Die Läuferlänge entspricht einem n-fachen der Summe aus Motormodullänge und Spaltlänge. Insbesondere kann die Läuferlänge als $L_L$, die Motormodullänge als $L_M$ und die Spaltlänge als $L_S$ bezeichnet werden. Dann kann die Läuferlänge $L_L$ mit der Formel

$$L_L = n\,(L_M + L_S)$$

berechnet werden. Der Faktor n ist in diesem Fall eine natürliche Zahl. Der Begriff des n-fachen umfasst also insbesondere auch, dass die Läuferlänge der Summe aus Motormodullänge und Spaltlänge entspricht. Der Begriff des n-fachen wird synonym zum Begriff des Vielfachen verwendet. Ein Antrieb des Läufers und damit auch der beweglichen Einheit kann beispielsweise dadurch erfolgen, dass die Antriebsspulen bestromt werden und ein dadurch erzeugtes Antriebsmagnetfeld mit den Magneten des Läufers wechselwirkt.

Es kann vorgesehen sein, dass das lineare Transportsystem mehrere bewegliche Einheiten umfasst, die jeweils einen solchen Läufer als Teil des Linearmotors aufweisen. Die beweglichen Einheiten und/oder die Läufer können dabei identisch aufgebaut sein.

Der Abstand zweier Antriebsspulenmittelpunkte kann als Antriebsspulenlänge bezeichnet werden. Die Spaltlänge kann mindestens der doppelten Antriebsspulenlänge, insbesondere mindestens der dreifachen Antriebsspulenlänge, entsprechen. Die Motormodullänge kann dann ein Vielfaches der Antriebsspulenlänge sein. Insbesondere kann die Motormodullänge ein Vielfaches der dreifachen Antriebsspulenlänge sein. Die Magnete des Läufers können eine Magnetlänge aufweisen, wobei die Magnetlänge einem Abstand zwischen zwei Mittelpunkten der Magnete entspricht. Die Motormodullänge kann ein Vielfaches der vierfachen Magnetlänge sein. Insbesondere kann die vierfache Magnetlänge der dreifachen Antriebsspulenlänge entsprechen. Es kann ferner vorgesehen sein, dass der Abstand zweier Antriebsspulenmittelpunkte ungleich dem Abstand zweier Magnetmittelpunkte ist.

In einer Ausführungsform ist die Anzahl der Magneten des Läufers ein Vielfaches von vier. Die Anzahl der Antriebsspulen pro Motormodul ist ein Vielfaches von drei. Alternativ kann auch vorgesehen sein, dass die Anzahl der Magneten des Läufers ein Vielfaches von fünf und die Anzahl der Antriebsspulen pro Motormodul ein Vielfaches von drei ist. Alternativ kann auch vorgesehen sein, dass die Anzahl der Magneten des Läufers ein Vielfaches von sieben und die Anzahl der Antriebsspulen pro Motormodul ein Vielfaches von sechs ist.

In einer Ausführungsform entspricht die Spaltlänge mindestens der Motormodullänge. In diesem Fall kann zumindest jedes zweite Motormodul eingespart werden, verglichen mit einem herkömmlichen linearen Transportsystem. So ergeben sich Kosteneinsparungen und Ressourceneinsparungen.

In einer Ausführungsform ist die Spaltlänge ein Vielfaches der Motormodullänge. Insbesondere kann die Spaltlänge der Motormodullänge, der doppelten Motormodullänge oder der dreifachen Motormodullänge entsprechen. In diesen Fällen werden nur die Hälfte, ein Drittel beziehungsweise ein Viertel der Motormodule benötigt, verglichen mit einem herkömmlichen linearen Transportsystem.

In einer Ausführungsform ist in einem ersten Bereich der Spalt ein erster Spalt und die Spaltlänge eine erste Spaltlänge. In einem zweiten Bereich zwischen zwei der Motormodule ist ein zweiter Spalt ausgebildet. Der zweite Spalt weist eine zweite Spaltlänge auf. Die erste Spaltlänge und die zweite Spaltlänge sind unterschiedlich. Dies ermöglicht beispielsweise, dass im ersten Bereich und im zweiten Bereich unterschiedliche Antriebsmagnetfelder erzeugt werden, die sich insbesondere hinsichtlich einer Magnetfeldstärke unterscheiden können. Dadurch kann ein lineares Transportsystem bereitgestellt werden, bei dem beispielsweise im zweiten Bereich ein vergrößertes Antriebsmagnetfeld bereitgestellt werden kann verglichen mit dem ersten Bereich. Der erste Bereich kann dann beispielsweise für einen Transport geeignet sein und das Antriebsmagnetfeld im ersten Bereich für einen Transport ausreichen, während im zweiten Bereich eine Bearbeitung eines auf der beweglichen Einheit angeordneten Objekts ein vergrößertes Antriebsmagnetfeld erfordert. Mit dieser Ausgestaltung können also immer noch Motormodule eingespart werden und trotzdem in Teilbereichen des linearen Transportsystems ein vergrößertes Antriebsmagnetfeld bereitgestellt werden.

In einer Ausführungsform entspricht die erste Spaltlänge einem n-fachen der Motormodullänge. Die zweite Spaltlänge entspricht dem um eins verringerten n-fachen der Motormodullänge. Beispielsweise kann die erste Spaltlänge der dreifachen Motormodullänge entsprechen und die zweite Spaltlänge der doppelten Motormodullänge. In einer Ausführungsform entspricht die erste Spaltlänge einem n-fachen der Motormodullänge. Die zweite Spaltlänge entspricht dem um zwei verringerten n-fachen der Motormodullänge. Dadurch ergeben sich jeweils Einsparungen bei der Anzahl der Motormodule bei gleichzeitiger Erhöhung der Antriebsmagnetfelder im zweiten Bereich.

In einer Ausführungsform entspricht die erste Spaltlänge der dreifachen Motormodullänge. Die zweite Spaltlänge entspricht der Motormodullänge. Dies bedeutet insbesondere, dass die im ersten Bereich vorgesehene erste Spaltlänge zunächst bei einem Aufbau des linearen Transportsystems auch im zweiten Bereich vorgesehen werden kann und anschließend mittig in die ersten Spalte im zweiten Bereich ein weiteres Motormodul platziert wird, so dass sich die zweite Spaltlänge ausbildet. So kann ein einfacher Aufbau des linearen Transportsystems erreicht werden.

In einer Ausführungsform sind die Magnete des Läufers in zwei Magnetelementen angeordnet. Die Magnetelemente weisen jeweils mehrere Magnete auf. Die Läuferlänge ist eine Summe von Magnetelementlängen der Magnetelemente. Die Magnetelemente sind beabstandet voneinander angeordnet. Insbesondere ist zwischen den Magnetelementen also ein Zwischenbereich ohne Magneten des Läufers ausgebildet. Dabei kann vorgesehen sein, dass ein Abstand der Magnetelemente der Magnetlänge entspricht. Die Magnetelementlängen können beispielsweise der halben Magnetlänge entsprechen. Dadurch kann vorgesehen sein, dass die Magnete auf zwei Magnetelemente aufgeteilt sind. Gegebenenfalls kann mit dieser Anordnung eine verbesserte Positionsbestimmung für den Läufer beziehungsweise die bewegliche Einheit erreicht werden.

In einer Ausführungsform werden die Antriebsspulen der Motormodule derart bestromt, dass auf zumindest einen Magneten eines der Magnetelemente des Läufers eine Kraft wirkt. Dadurch kann ein kontinuierlicher Antrieb des Läufers erreicht werden.

In einer Ausführungsform können mehrere Antriebsspulen unterschiedlicher Motormodule gleichzeitig bestromt werden, um eine Kraft auf die Magnetelemente des Läufers zu erzeugen. Dies ermöglicht einen flexibleren Antrieb des Läufers.

Die Motormodule sind in Motormodulelementen angeordnet. Die Motormodulelemente weisen ferner ein Magnetsensorelement auf. Mittels des Magnetsensorelements kann ein Magnetfeld des Läufers gemessen und daraus eine Läuferposition bestimmt werden. Durch die bestimmte Läuferposition ist auch eine Position der beweglichen Einheit bekannt und es kann vorgesehen sein, die Antriebsspulen anhand der Position des Läufers beziehungsweise der Läuferposition zu bestromen, um eine Antriebskraft bereitzustellen.

Das Magnetsensorelement weist eine Magnetsensorelementlänge auf. Die Magnetsensorelementlänge ist größer ist als die Motormodullänge. Magnetsensoren sind in der Herstellung oftmals günstiger als Antriebsspulen. Im Gegensatz zu einem herkömmlichen linearen Transportsystem ist im erfindungsgemäßen linearen Transportsystem ein Spalt vorgesehen, in dem keine Motormodule angeordnet sind. Es kann jedoch vorgesehen sein, dort zusätzliche Magnetsensoren anzuordnen, so dass die Magnetsensorelementlänge größer ist als die Motormodullänge. Dabei kann es vorgesehen sein, dass auch zwischen den Magnetsensoren ein Sensorspalt ausgebildet ist, der jedoch kleiner als der Spalt zwischen den Motormodulen ist. Mit dieser Anordnung kann erreicht werden, dass jede mögliche Läuferposition eindeutig bestimmt werden kann.

Mittels des Magnetsensorelements wird ein Magnetfeld der Magnete des Läufers gemessen. Mittels des Magnetsensorelements wird ein Magnetfeld von Positionsmagneten der beweglichen Einheit gemessen. Die Bestimmung der Läuferposition erfolgt also über die zum Antrieb des Läufers verwendeten Magnete und/oder über zusätzlich angebrachte Positionsmagnete. Die Positionsmagnete können dabei insbesondere eine geringere magnetische Feldstärke aufweisen als die Magnete.

In einer Ausführungsform weisen die Magnete des Läufers in eine Richtung senkrecht zur Führungsschiene unterschiedliche Ausdehnung auf. Anhand der unterschiedlichen Ausdehnung der Magnete können Rückschlüsse auf die Läuferposition gezogen werden. Dies ermöglicht eine einfache Positionsbestimmung, deren Genauigkeit durch die unterschiedliche Ausdehnung senkrecht zur Führungsschiene erhöht ist.

In einer Ausführungsform weisen die Magnete aufgrund der unterschiedlichen Ausdehnung senkrecht zur Führungsschiene eine unterschiedliche relative Position zum Magnetsensorelement, beispielsweise einen unterschiedlichen Überlapp mit dem Magnetsensorelement, auf. Dadurch ist die Genauigkeit der Positionsbestimmung erhöht.

In einer Ausführungsform weisen die Positionsmagnete der beweglichen Einheit unterschiedliche Magnetfeldstärken auf. Auch mit dieser Ausgestaltung kann eine Genauigkeit der Positionsbestimmung erhöht werden, da sich die Magnetfelder der Positionsmagneten unterscheiden.

In einer Ausführungsform weisen die Positionsmagnete an einem in Bezug auf eine Bewegungsrichtung gesehen vorderen Ende und an einem hinteren Ende der beweglichen Einheit eine andere Magnetfeldstärke auf als zwischen dem vorderen Ende und dem hinteren Ende der beweglichen Einheit. Dies ermöglicht, mittels des Magnetsensorelements das vordere Ende beziehungsweise das hintere Ende der beweglichen Einheit zu erkennen. Das vordere Ende beziehungsweise hintere Ende beziehen sich also eine Bewegungsrichtung der beweglichen Einheit.

In einer Ausführungsform weist das lineare Transportsystem eine Steuereinheit auf. Die Steuereinheit ist eingerichtet, Steuerbefehle an die Motormodule auszugeben. Die Motormodule sind eingerichtet, die Antriebsspulen anhand der Steuerbefehle zu bestromen.

In einer Ausführungsform ist die Steuereinheit eingerichtet, die Steuerbefehle derart auszugeben, dass eine bewegliche Einheit eine vorgegebene Bewegung entlang der Führungsschiene ausführt. Die Steuereinheit ist ferner eingerichtet, anhand der vorgegebenen Bewegung einbaubedingte Abweichungen von Spaltlängen zu erkennen und für die Ausgabe weiterer Steuerbefehle zu berücksichtigen.

Insbesondere kann die Steuereinheit eingerichtet sein, über ein Verhältnis von Sensorsignalen von verschiedenen Magnetsensoren in verschiedenen Motormodulen zu erfassen und so die einbaubedingten Abweichungen zu erkennen und zu berücksichtigen. Dies kann dadurch erfolgen, dass die Sensorsignale bei einbaubedingten Abweichungen von Spaltlängen andere Verhältnisse zueinander aufweisen.

Die Erfindung wird anhand der beigefügten Figuren näher erläutert. Hierbei zeigen:

Fig. 1   eine Seitenansicht eines linearen Transportsystems;

Fig. 2   eine weitere Seitenansicht des linearen Transportsystems der Fig. 1;

Fig. 3   einen Querschnitt durch das lineare Transportsystem der Fig. 1;

Fig. 4   eine schematische Darstellung einer Draufsicht eines Stators und eines Läufers des linearen Transportsystems der Fig. 1 bis 3;

Fig. 5   schematische Darstellungen des Stators und des Läufers des linearen Transportsystems der Fig. 1 bis 4 für verschiedene Läuferpositionen;

Fig. 6   eine Seitenansicht eines weiteren linearen Transportsystems;

Fig. 7   einen Querschnitt durch das lineare Transportsystem der Fig. 6;

Fig. 8   ein Positionsmagnetelement;

Fig. 9   ein weiteres Positionsmagnetelement;

Fig. 10  ein weiteres Positionsmagnetelement;

Fig. 11  eine schematische Darstellung eines Stators und eines Läufers eines weiteren linearen Transportsystems;

Fig. 12  eine Seitenansicht eines weiteren linearen Transportsystems;

Fig. 13  eine schematische Darstellung eines Stators und eines Läufers eines weiteren linearen Transportsystems;

Fig. 14  eine schematische Darstellung eines Stators und eines Läufers eines weiteren linearen Transportsystems;

Fig. 15  eine schematische Darstellung eines Stators und eines Läufers eines weiteren linearen Transportsystems;

Fig. 16  eine schematische Darstellung einer Seitenansicht eines Stators und eines Läufers eines weiteren linearen Transportsystems;

Fig. 17  eine weitere Seitenansicht des linearen Transportsystems der Fig. 16;

Fig. 18  eine schematische Darstellung eines Stators und eines Läufers eines weiteren linearen Transportsystems; und

Fig. 19     eine schematische Darstellung eines Stators und eines Läufers eines weiteren linearen Transportsystems.

Im Folgenden können für gleichwirkende Elemente gleiche Bezugzeichen verwendet werden. Dabei wird gegebenenfalls davon abgesehen, bei jeder Figur diese Elemente erneut zu beschreiben. Trotzdem können diese gleichwirkenden Elemente in allen Ausgestaltungen entsprechend vorgesehen werden.

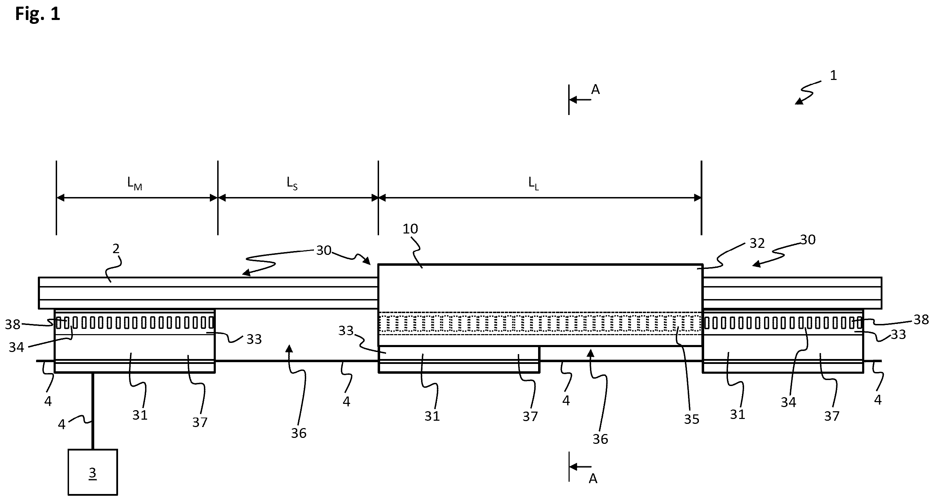

Fig. 1 zeigt eine Seitenansicht eines linearen Transportsystems 1. Das lineare Transportsystem 1 weist eine bewegliche Einheit 10, eine Führungsschiene 2 zum Führen der beweglichen Einheit 10 sowie einem Linearmotor 30 zum Antreiben der beweglichen Einheit 10 entlang der Führungsschiene 2 auf. Der Linearmotor 30 umfasst einen Stator 31 und einen Läufer 32. Der Stator 31 weist mehrere entlang der Führungsschiene 2 stationär angeordnete Motormodule 33, welche jeweils mehrere Antriebsspulen 34 aufweisen. Der Stator 31 besteht also aus mehreren Motormodulen 33. Exemplarisch sind drei Motormodule 33 dargestellt. Der Läufer 32 ist an der beweglichen Einheit 10 angeordnet und umfasst mehrere Magnete 35. Der Läufer 32 ist also Teil der beweglichen Einheit 10, die weitere, nicht zum Läufer 32 gehörende, Bauteile wie beispielsweise Rollen zum Abrollen an der Führungsschiene 2 aufweisen kann. Eines der Motormodule 33 ist vom Läufer 32 beziehungsweise von der beweglichen Einheit 10 verdeckt. Zwischen den drei dargestellten Motormodulen 33 ist jeweils ein Spalt 36 ausgebildet. Entsprechend sind die Motormodule 33 beabstandet zueinander angeordnet. Die Motormodule 33 sind in Fig. 1 in jeweils einem Motormodulelement 37 angeordnet. Neben den Motormodulen 33 können die Motormodulelemente 37 weitere Bauelemente umfassen wie beispielsweise Posiitonssensoren und/oder ein gemeinsames Gehäuse und/oder eine Ansteuerungselektronik zur Ansteuerung der Antriebsspulen 34 der Motormodule 33. Die Motormodule 33 weisen jeweils eine Motormodullänge $L_M$ auf. Der Läufer 32 weist eine Läuferlänge $L_L$ auf. Der Spalt 36 weist eine Spaltlänge $L_S$ auf. Die Läuferlänge $L_L$ entspricht einem n-fachen der Summe aus Motormodullänge $L_M$ und Spaltlänge $L_S$. Insbesondere kann also die Läuferlänge $L_L$ mit der Formel

$$L_L = n \, (L_M + L_S)$$

berechnet werden, wobei n eine natürliche Zahl ist. Der Begriff des n-fachen umfasst also insbesondere auch, dass die Läuferlänge der Summe aus Motormodullänge und Spaltlänge entspricht. Ein Antrieb des Läufers 32 und damit auch der beweglichen Einheit 10 kann beispielsweise dadurch erfolgen, dass die in Fig. 1 nicht dargestellten Antriebsspulen 34 bestromt werden und ein dadurch erzeugtes Antriebsmagnetfeld mit den Magneten 35 des Läufers 32 wechselwirkt. Optional in Fig. 1 dargestellt sind Statorzähne 38 der Motormodule 33.

Jeder zweite Statorzahn 38 ist von einer Antriebsspule 34 umwickelt und dient somit als Spulenkern für die jeweilige Antriebsspule 34. Die Statorzähne 38 können aus einem ferromagnetischen Material bestehen. Eine Bestromung der Antriebsspulen 34 kann durch die Statorzähne 38 zu einer Verstärkung des Antriebsmagnetfeldes führen.

Es kann vorgesehen sein, dass das lineare Transportsystem 1 mehrere bewegliche Einheiten 10 umfasst, die jeweils einen solchen Läufer 32 als Teil des Linearmotors 30 aufweisen, obwohl in Fig. 1 nur eine bewegliche Einheit 10 gezeigt ist. Die beweglichen Einheiten 10 und/oder die Läufer 32 können dabei identisch aufgebaut sein.

Es kann vorgesehen sein, dass die Motormodulelemente 37 in der Lage sind, Positionen des Läufers 32 zu erkennen, beispielsweise über Sensoren in verschiedenen Ausgestaltungen. Ferner ist es möglich, externe Positionssensoren vorzusehen. Die hier erläuterten Zusammenhänge sind gegebenenfalls unabhängig davon, wie eine Läuferposition bestimmt wird.

In dem in Fig. 1 gezeigten Ausführungsbeispiel entspricht die Spaltlänge $L_S$ der Motormodullänge $L_M$. Es kann vorgesehen sein, dass die Spaltlänge $L_S$ mindestens der Motormodullänge $L_M$ entspricht. In diesem Fall kann zumindest jedes zweite Motormodul 33 eingespart werden, verglichen mit einem herkömmlichen linearen Transportsystem 1. In einem herkömmlichen linearen Transportsystem würden anstelle der Spalte 36 weitere Motormodulelemente 37 angeordnet sein und so ein durchgehender Stator 31 erzeugt werden. Durch die Anordnung der Motormodule 33 wie in Fig. 1 gezeigt ergeben sich Kosteneinsparungen und Ressourceneinsparungen.

Ebenfalls in Fig. 1 gezeigt ist, dass das lineare Transportsystem 1 eine Steuereinheit 3 umfasst, die mit einem der Motormodulelemente 37 mittels einer Datenleitung 4 verbunden ist. Die Motormodulelemente 37 untereinander sind ebenfalls mit einer Datenleitung 4 verbunden. Insbesondere kann eine Kommunikation zwischen der Steuereinheit 3 und den Motormodulelementen 37 über einen Datenbus, beispielsweise einen Feldbus, erfolgen, wobei der Datenbus über die Datenleitungen 4 bereitgestellt werden kann. Insbesondere kann die Steuereinheit 3 ein aktiver Teilnehmer sein und den Datenbus bereitstellen, während die Motormodulelemente 37 passive Teilnehmer sein können, die mit dem Datenbus adressiert werden. Gegebenenfalls kann auch vorgesehen sein, dass jede der Motormodulelementen 37 direkt mit der Steuereinheit 3 verbunden ist. Die Datenleitungen 4 können ferner auch eine Strom- und/oder Spannungsversorgung der Motormodulelemente 37 bereitstellen. Alternativ ist es möglich, zusätzliche, nicht gezeigte, Leitungen zur Strom- und/oder Spannungsversorgung zu verwenden.

Die Steuereinheit 3 kann eingerichtet sein, Steuerbefehle an die Motormodule 33 auszugeben. Die Motormodule 33 können eingerichtet sein, die Antriebsspulen 34 anhand der Steuerbefehle zu bestromen. Die Steuereinheit 3 kann ferner eingerichtet sein, die Steuerbefehle derart auszugeben, dass eine bewegliche Einheit 10 eine vorgegebene Bewegung entlang der Führungsschiene 1 ausführt, anhand der vorgegebenen Bewegung einbaubedingte Abweichungen von Spaltlängen $L_S$ zu erkennen und für die Ausgabe weiterer Steuerbefehle zu berücksichtigen. In den Motormoduleinheiten 37 können ortsfeste (Posi-tions-)Sensoren verbaut sein, wie beispielsweise Hall-Sensoren. Wenn ein Magnet oder ein Positionsmagnet über den Hall-Sensor bewegt wird, ergibt sich ein Signalverlauf dieses Hall-Sensors. Aus den Signalverläufen mehrerer solcher Hall-Sensoren können Positionen des Läufers 32 beziehungsweise der beweglichen Einheit 10 berechnet werden. Wird ein Signalverlauf oder werden mehrere Signalverläufe verschiedener Motormoduleinheiten 37 verglichen, können Unterschiede zum theoretischen Sollverlauf auf einbaubedingte Abweichungen von Spaltlängen $L_S$ hinweisen.

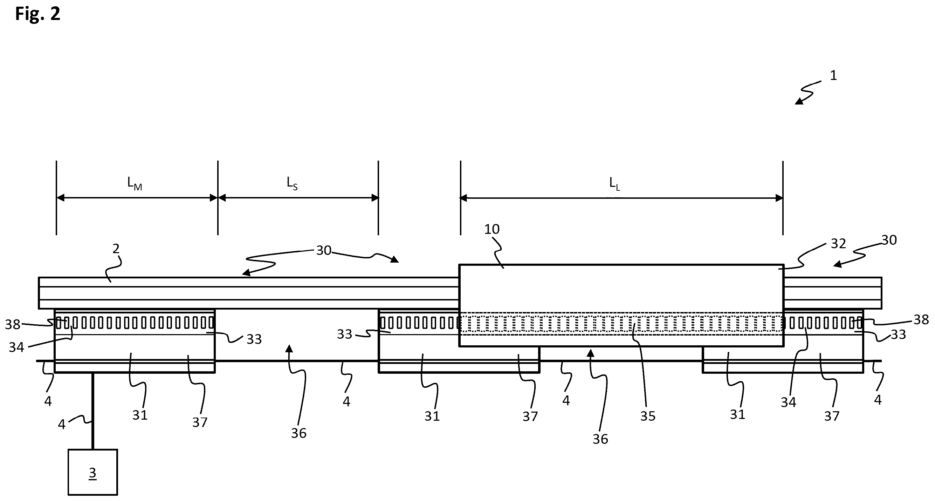

Fig. 2 zeigt ebenfalls das lineare Transportsystem 1 der Fig. 1. Sofern im Folgenden keine Unterschiede beschrieben werden, trifft die Beschreibung des Transportsystems 1 zu Fig. 1 auch auf das Transportsystem 1 der Fig. 2 zu.

Im Unterschied zur Darstellung in Fig. 1 ist die bewegliche Einheit 10 beziehungsweise der Läufer 32 mittels bestromter Antriebsspulen 34 des mittleren und des rechten der drei dargestellten Motormodule 33 beziehungsweise Statoren 31 derart entlang der Führungsschiene bewegt worden, dass die bewegliche Einheit 10 nun teilweise über den mittleren Motormodul 33, über dem Spalt 36 zwischen dem mittleren und dem rechten Motormodul 33 und teilweise über dem rechten Motormodul steht.

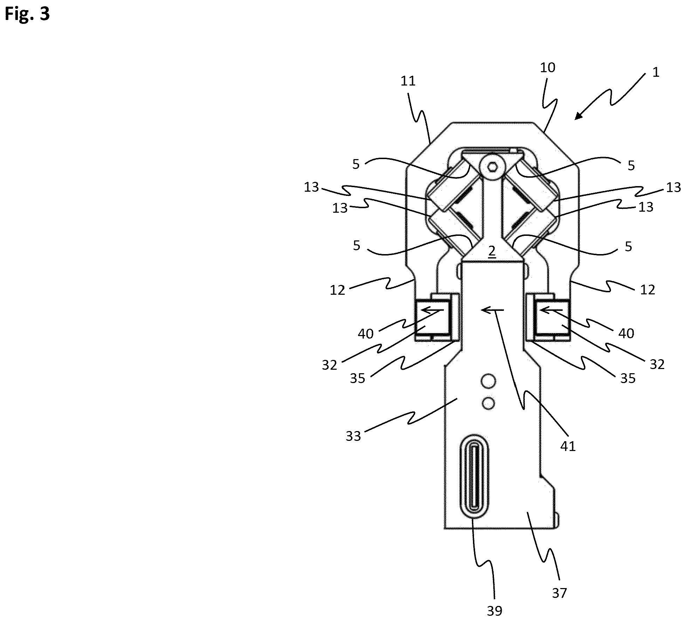

Fig. 3 zeigt einen Querschnitt durch das lineare Transportsystem 1 der Fig. 1 an der in Fig. 1 mit A-A bezeichneten Schnittebene. Diese ist im Bereich eines der Spalte 36 angeordnet, so dass in Fig. 3 ein Querschnitt der beweglichen Einheit 10 und der Führungsschiene 2 sowie eine Seitenansicht des Motormodulelements 37 sichtbar ist. Das Motormodulelement 37 weist einen Anschluss 39 für die Datenleitung 4 auf. Über den Ansschluss 39 kann zusätzlich auch eine Strom- und/oder Spannungsversorgung des Motormodulelements 37 erreicht werden. Alternativ kann das Motormodulelement 37 einen nicht gezeigten Anschluss für eine Strom- und/oder Spannungsversorgung aufweisen. Die bewegliche Einheit 10 weist einen Grundkörper 11 auf, der die Führungsschiene 2 im Wesentlichen u-förmig umschließt. An den Schenkeln 12 des Grundkörpers 11 sind die Magnete 35 des Läufers 32 angeordnet, wobei die Magnete 35 auf Höhe der hier nicht dargestellten Statorzähne und Antriebsspulen des Motormodulelements 37 angeordnet sind. Ferner weist die bewegliche Einheit 10 Laufrollen 13 auf, die gegen Laufflächen 5 der Führungsschiene 2 abgestützt sind und die bewegliche Einheit 10 relativ zur Führungsschiene 2 halten.

Die Magnete 35 des Läufers 32 sind dabei auf beiden Seiten der Motormodulelemente 37 angeordnet, so dass eine Wechselwirkung mit Magnetfeldern der Antriebsspulen 34 möglich ist. Insbesondere kann vorgesehen sein, dass eine Richtung eines Magnetfelds 40 der Magnete 35 parallel oder antiparallel zu einem Spulenmagnetfeld 41 ist. Das Spulenmagnetfeld 41 kann dabei durch die hier nicht dargestellten Antriebsspulen 34 erzeugt sein. Die Magnete 35 können Permanentmagnete sein. Dadurch ist es insbesondere möglich, dass der Läufer 32 komplett ohne bewegliche Teile und insbesondere auch ohne zu bestromende Elemente auskommt und der Antrieb des Läufers 32 beziehungsweise der beweglichen Einheit 10 komplett über eine Bestromung der Antriebsspulen 34 erfolgen kann.

Im Gegensatz zur Darstellung der Fig. 1 bis 3 kann die Führungsschiene 2 auch anders an den Motormodulelementen 37 angeordnet werden und sich daraus eine andere Konfiguration von Laufrollen 13, Grundkörper 11 und Anordnung des Stators 31 relativ zum Läufer 32 ergeben. Relevant für die vorliegende Erfindung ist nicht die relative Anordnung von Führungsschiene 2, Motormodulelementen 37, Laufrollen 13, Grundkörper 11 und Anordnung des Stators 31 relativ zum Läufer 32, sondern die Relation aus Läuferlänge $L_L$, Motormodullänge $L_M$ und Spaltlänge $L_S$ wie weiter oben beschrieben.

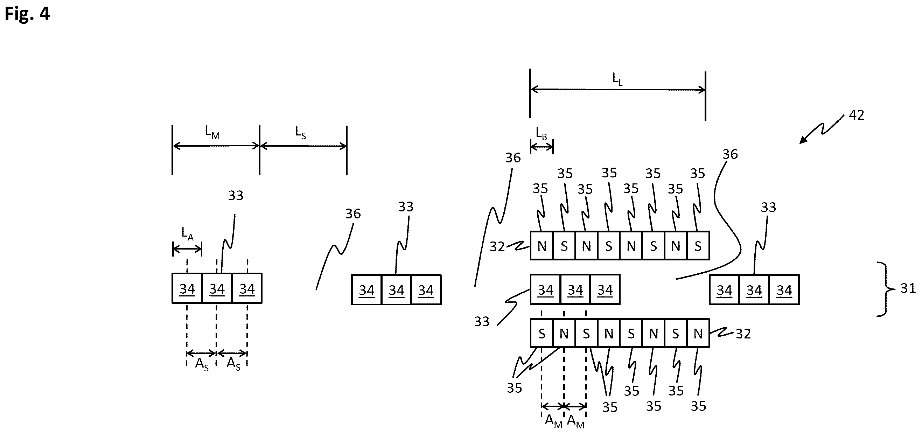

Fig. 4 zeigt sehr vereinfacht ein Linearmotorschema 42 des Linearmotors 30 des linearen Transportsystems 1 der Fig. 1 bis 3 in einer Ansicht von Oben. Dabei sind hier in Fig. 4 beispielhaft vier Motormodule 33 dargestellt, die jeweils drei Antriebsspulen 34 beinhalten. Die Antriebsspulen 34 können jeweils hier nicht dargestellte Statorzähne 38 aufweisen, die als dann als Spulenkerne dienen. Ebenfalls können zwischen den einzelnen Antriebsspulen 34 weitere, hier ebenfalls nicht dargestellte Statorzähne 38 angeordnet sein. Somit können sich nicht umwickelte und mit einer Antriebsspule 34 umwickelte Statorzähne 38 in einer regelmäßigen Anordnung abwechseln. Insbesondere kann eine Anzahl der Antriebsspulen 34 pro Motormodul 33 ein Vielfaches von drei sein. Es können also beispielsweise drei, sechs, neun, zwölf, etc. Antriebsspulen 34 pro Motormodul 33 angeordnet sein. Die Antriebsspulen 34 können dabei derart angeordnet sein, dass ein Antriebsmagnetfeld in der Darstellung der Fig. 4 im Wesentlichen senkrecht ausgebildet wird, also dass ein Magnetfeldvektor des Antriebsmagnetfelds nach oben beziehungsweise unten in der Darstellung der Fig. 4 eine größere Komponente hat als in andere Richtungen. Die Magnete 35 des Läufers 32 sind jeweils auf beiden Seiten der Motormodule 33 angeordnet. Dabei ist mit einem N beziehungsweise einem S angedeutet, welcher Pol des Magneten 35 den Motormodule 33 zugewandt ist. Entlang der Motormodule 33 sind dabei die Magneten 35 derart angeordnet, dass jeweils ein Magnet 35 mit zum Motormodul 33 zugewandten N-Pol einem Magneten 35 mit zum Motormodul 33 zugewandten S-Pol gegenüberliegt.

In einem Ausführungsbeispiel ist die Anzahl der Magneten 35 des Läufers 32 ein Vielfaches von vier.

Exemplarisch dargestellt ist in Fig. 4, dass der Läufer 32 auf jeder Seite acht Magnete 35 aufweist, die abwechselnd mit ihrem N-Pol und S-Pol dem Motormodul 35 zugewandt sind. Alternativ kann auch vorgesehen sein, dass die Anzahl der Magneten 35 des Läufers 32 ein Vielfaches von fünf und die Anzahl der Antriebsspulen 34 pro Motormodul 33 ein Vielfaches von drei ist. Alternativ kann auch vorgesehen sein, dass die Anzahl der Magneten 35 des Läufers 32 ein Vielfaches von sieben und die Anzahl der Antriebsspulen 34 pro Motormodul 33 ein Vielfaches von sechs ist.

In einem alternativen Ausführungsbeispiel kann vorgesehen sein, dass der Läufer 32 mit den Magneten 35 nur auf einer Seite der Motormodule 35 angeordnet ist. Auch in diesem Fall kann die Polarität der Magneten 35 wie in Fig. 4 gezeigt abwechselnd sein, also abwechselnd ein N-Pol und ein S-Pol dem Motormodul 33 zugewandt sein.

Wie in Fig. 4 gezeigt, weisen die Antriebsspulen 34 einen Abstand $A_S$ ihrer Antriebsspulenmittelpunkte zueinander auf. Die Motormodullänge $L_M$ kann dann dem Abstand $A_S$ zweier Antriebsspulenmittelpunkte multipliziert mit einer Anzahl der Antriebsspulen 34 pro Motormodul 33 entsprechen. Für die Ausgestaltung der Fig. 4 entspricht die Motormodullänge $L_M$ beispielsweise dem dreifachen Abstand $A_S$ zweier Antriebsspulenmittelpunkte. Die Magneten 35 des Läufers 32 können ebenfalls einen Abstand $A_M$ zweier Magnetmittelpunkte aufweisen. Die Läuferlänge $L_L$ entspricht dann dem Abstand $A_M$ zweier Magnetmittelpunkte multipliziert mit einer Anzahl der Magnete 35 des Läufers 32, also für die Ausgestaltung gemäß der Fig. 4 dem achtfachen des Abstands $A_M$ zweier Magnetmittelpunkte. Es kann vorgesehen sein, dass der Abstand $A_S$ zweier Antriebsspulenmittelpunkte ungleich dem Abstand $A_M$ zweier Magnetmittelpunkte ist.

In einem weiteren alternativen Ausführungsbeispiel kann bei einer einseitigen Antriebsmagnetanordnung in Fahrtrichtung der beweglichen Einheit 10 parallel zu den Antriebsmagneten 35 eine linienförmige Magnetfeldsensoranordnung vorgesehen sein. Insbesondere können die Magnetfeldsensoren auf einer Leiterplatte angeordnet sein. Es kann weiter vorgesehen sein, Motormodulelemente mit einer höheren Dichte an Magnetfeldsensoren vorzusehen, um in bestimmten Anwendungsfällen eine verbesserte Genauigkeit einer Positionsbestimmung der beweglichen Einheit 10 zu erreichen.

Der Abstand $A_S$ zweier Antriebsspulenmittelpunkte kann auch als Antriebsspulenlänge $L_A$ bezeichnet werden. Die Spaltlänge $L_S$ kann mindestens der doppelten Antriebsspulenlänge $L_A$, insbesondere mindestens der dreifachen Antriebsspulenlänge $L_A$, entsprechen. Die Motormodullänge $L_M$ kann dann ein Vielfaches der Antriebsspulenlänge $L_A$ sein. Insbesondere kann die Motormodullänge $L_M$ ein Vielfaches der dreifachen Antriebsspulenlänge $L_A$ sein. Die Magnete 35 des Läufers 32 können eine Magnetlänge $L_B$ aufweisen, wobei die Magnetlänge $L_B$ einem Abstand $A_M$ zwischen zwei Mittelpunkten der Magnete 35 entspricht. Die Motormodullänge $L_M$ kann ein Vielfaches der vierfachen Magnetlänge $L_B$ sein. Insbesondere kann die vierfache Magnetlänge $L_B$ der dreifachen Antriebsspulenlänge $L_A$ entsprechen. Ferner können auch die weiter oben erwähnten Kombinationen vorgesehen sein.

Entspricht die Spaltlänge $L_S$ mindestens der Motormodullänge $L_M$, wie in Fig. 1, 2 und 4 gezeigt, kann zumindest jedes zweite Motormodul 33 beziehungsweise Motormodulelement 37 eingespart werden, verglichen mit einem herkömmlichen linearen Transportsystem 1. So ergeben sich Kosteneinsparungen und Ressourceneinsparungen.

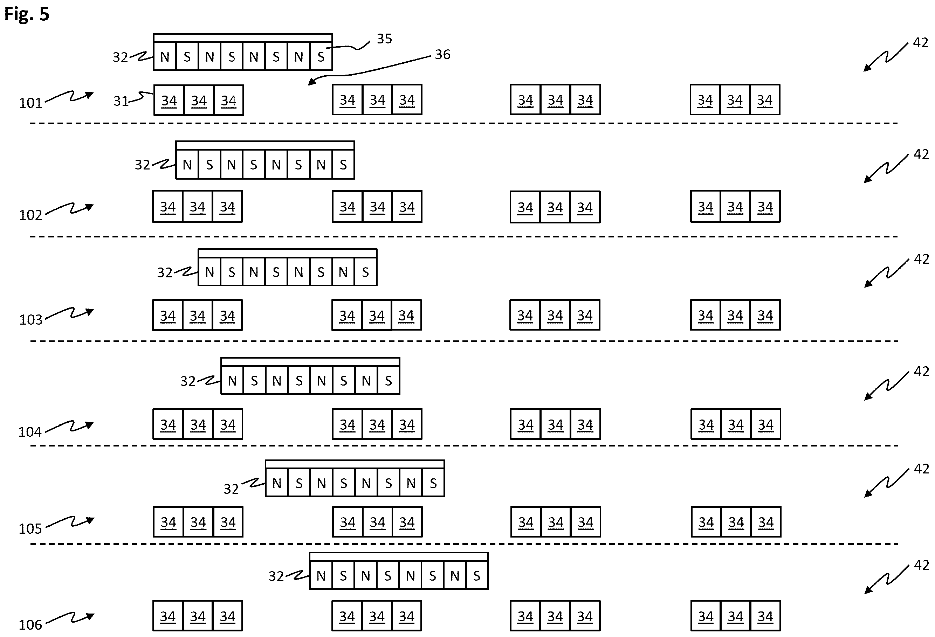

Fig. 5 zeigt eine erste Ansicht 101 eines Linearmotorschemas 42 des Linearmotors 30 des linearen Transportsystems 1 der Fig. 1 bis 4 von oben. Aus Gründen der Übersichtlichkeit wird in Fig. 5 jeweils nur eine Seite des Läufers 32 in Verbindung mit den Statoren 31 dargestellt. Selbstverständlich kann der Aufbau gemäß der Fig. 5 auch mit beidseitig der Statoren 31 ausgebildeten Magneten 35 des Läufers 32 analog zu der Darstellung in den Fig. 1 bis 4 ausgeführt sein. Der Läufer 32 mit den Magneten 35 ist derart angeordnet, dass er auf der in der Darstellung ersten Ansicht 101 linken Seite mit einem der Motormodule 33 bündig abschließt. Das Motormodul 33 und die Magnete 35 sind wie im Zusammenhang mit Fig. 4 beschrieben aufgebaut. Dabei befinden sich vier Magnete 35 über dem entsprechenden Motormodul 33 und vier Magnete 35 über dem Spalt 36. Fig. 5 zeigt ferner eine zweite Ansicht 102 des Linearmotorschemas 42 des Linearmotors 30 des linearen Transportsystems 1, bei dem der Läufer 32 um eine Magnetlänge $L_B$ nach rechts bewegt wurde. Auch in der zweiten Ansicht 102 befinden sich vier Magnete 35 über Motormodulen 33 und vier Magnete 35 über dem Spalt 36. Hier sind jedoch drei Magnete 35 über einem der Motormodule 33 und ein Magnet 35 über einem anderen Motormodul 33 angeordnet, wobei sich der Spalt 36 zwischen diesen Motormodulen 33 befindet. Durch Bestromung der Antriebsspulen 34 sind also sowohl in der ersten Ansicht 101 als auch in der zweiten Ansicht 102 vier Magnete 35 über Motormodulen 33 angeordnet und vier Magnete 35 über einem Spalt 36. So kann eine gleichbleibende Antriebskraft oder gegebenenfalls eine annähernd gleichbleibende Antriebskraft auch bei Bewegung des Läufers 32 und damit der beweglichen Einheit 10 bereitgestellt werden.

Fig. 5 zeigt auch eine dritte Ansicht 103 und eine vierte Ansicht 104 des Linearmotorschemas 42 des Linearmotors 30 des linearen Transportsystems 1, bei denen der Läufer 32 jeweils um eine weitere Magnetlänge $L_B$ nach rechts bewegt wurde. Auch in diesen Fällen sind jeweils vier Magnete 35 über Motormodulen 33 angeordnet und vier Magnete 35 über einem Spalt 36 angeordnet. Fig. 5 zeigt auch eine fünfte Ansicht 105 und eine sechste Ansicht 106 des Linearmotorschemas 42 des Linearmotors 30 des linearen Transportsystems 1, bei denen der Läufer 32 jeweils um zwei weitere Magnetlängen $L_B$ nach rechts bewegt wurde. Auch in diesen Fällen sind jeweils vier Magnete 35 über Motormodulen 33 angeordnet und vier Magnete 35 über einem Spalt 36 angeordnet.

Es kann vorgesehen sein, dass die Motormodule 33 beziehungsweise die Motormodulelemente 37 Magnetfeldsensoren aufweisen, mit denen das Magnetfeld 40 der Magnete 35 zur Positionsbestimmung des Läufers 32 verwendet werden kann. Die in der fünften Ansicht 105 und der sechsten Ansicht 106 gezeigten Positionen können dabei insbesondere deshalb problematisch sein, da diese beiden Positionen von den Magnetfeldsensoren nicht unterschieden werden können. Im Folgenden werden vorteilhafte Ausgestaltungen erläutert, mit denen dieses Problem gelöst werden kann. Grundsätzlich kann aber auch vorgesehen sein, dass die Steuereinheit 3 eine Position des Läufers 32 in der fünften Ansicht 105 und der sechsten Ansicht 106 dadurch unterscheiden kann, dass sich aus der Information über die Bestromung der Antriebsspulen 34 ergibt, ob sich der Läufer 32 in der Position der fünften Ansicht 105 oder in der Position der sechsten Ansicht 106 befindet.

Es kann also insbesondere vorgesehen sein, dass die Motormodule 33 beziehungsweise die Motormodulelemente 37 ferner ein Magnetsensorelement aufweisen und mittels des Magnetsensorelements ein Magnetfeld 40 des Läufers 32 gemessen und daraus eine Läuferposition bestimmt werden kann. Durch die bestimmte Läuferposition ist auch eine Position der beweglichen Einheit 10 bekannt und es kann vorgesehen sein, die Antriebsspulen 34 anhand der Position des Läufers 32 beziehungsweise der Läuferposition zu bestromen, um eine Antriebskraft bereitzustellen.

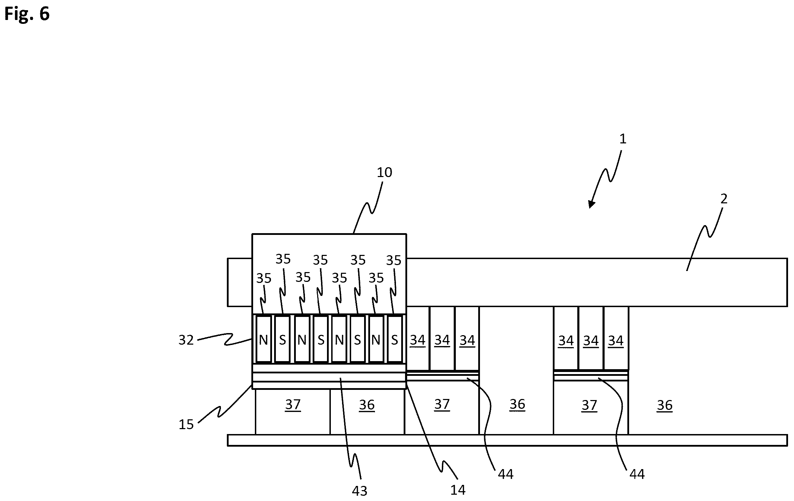

Fig. 6 zeigt eine Seitenansicht eines weiteren linearen Transportsystems 1, das dem linearen Transportsystem 1 der Fig. 1 bis 5 entspricht, sofern im Folgenden keine Unterschiede beschrieben sind. Die bewegliche Einheit 10 weist ein Positionsmagnetelement 43 mit hier nicht dargestellten Positionsmagneten auf, die unterhalb der Magnete 35 des Läufers 32 angeordnet sind. Das Positionsmagnetelement 43 ist gegenüber den Motormodulelementen 37 angebracht. An der betreffenden Stelle der Motormodulelemente 37 sind Magnetsensorelemente 44 angeordnet. Mit den Magnetsensorelementen 44 kann ein Magnetfeld des Positionsmagnetelements 43 ausgewertet werden, um eine Läuferposition zu ermitteln. Die bewegliche Einheit 10 weist ferner ein vorderes Ende 14 und ein hinteres Ende 15 auf. Die Magnetsensorelemente 44 können insbesondere Hall-Sensoren, beispielsweise 3D-Hall-Sensoren, umfassen.

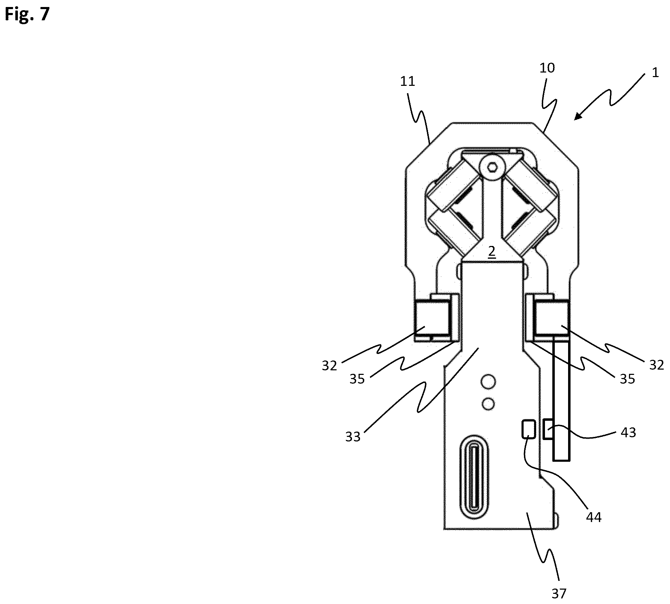

Fig. 7 zeigt einen Querschnitt durch das lineare Transportsystem 1 der Fig. 6. Das lineare Transportsystem 1 gemäß der Fig. 7 ist im Wesentlichen aufgebaut wie das Transportsystem 1 entsprechend der Fig. 3, so dass hier nur noch auf die Unterschiede eingegangen wird. Das Positionsmagnetelement 43 ist dem Magnetsensorelement 44 gegenüberliegend angeordnet. Es kann vorgesehen sein, dass das Magnetsensorelement 44 derart im Motormodulelement 37 angeordnet wird, dass eine Beeinflussung des Magnetsensorelements 44 durch die Magnete 35 minimiert ist, beispielsweise indem das Magnetsensorelement 44 beabstandet zu den Magneten 35 angeordnet ist. In einem nicht gezeigten Ausführungsbeispiel kann mit dem Magnetsensorelement auch ein Magnetfeld 40 der Magnete 35 zur Positionsbestimmung des Läufers 32 beziehungsweise der beweglichen Einheit 10 ausgewertet werden. Es kann ferner vorgesehen werden, dass das Positionsmagnetelement 43 kodiert ist. Das bedeutet, dass die Positionsmagnete des Positionsmagnetelements 43 über die Länge des Läufers 32 unterschiedliche Eigenschaften aufweisen können, so dass eine genauere Positionsbestimmung des Läufers 32 möglich ist. Insbesondere können sich also gemessene Magnetfelder beziehungsweise Magnetfeldvektoren bei einem Magnetsensorelement 44 in den Achsen der verschiedenen Magnetfelder welches die mehreren Magnetfeldsensoren, die ein Magnetsensorelement 44 bilden, unterscheiden.

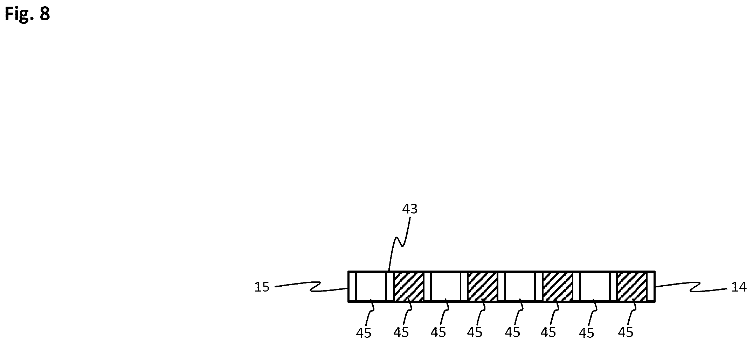

Fig. 8 zeigt eine Ansicht eines Positionsmagnetelements 43 mit Positionsmagneten 45. Die Positionsmagnete 45 sind abwechselnd als N-Pol und S-Pol ausgestaltet. Zur besseren Unterscheidung sind die S-Pole in Fig. 8 schraffiert dargestellt. Eine Positionsbestimmung mit einem solchen Positionsmagnetelement 43 entspricht im Wesentlichen der Positionsbestimmung anhand der Magnete 35 des Läufers. Dies kann den Vorteil haben, dass die Positionsmagnete 45 nicht mit dem Antriebsmagnetfeld der Antriebsspulen 33 wechselwirken und so das von den Positionsmagneten 45 erzeugte Magnetfeld nicht von der Bestromung der Antriebsspulen 33 beeinflusst wird. Ferner haben die Positionsmagnete 45 keinen Einfluss auf ein Fahrverhalten der beweglichen Einheit 10, da eine Wechselwirkung mit den Antriebsspulen 33 beziehungsweise Magneten 35 minimiert ist.

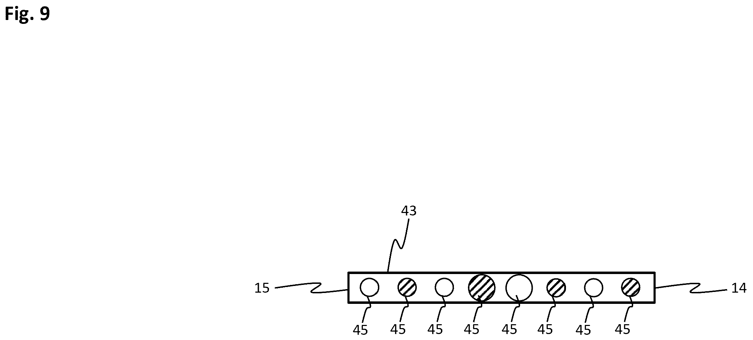

Fig. 9 zeigt eine Ansicht eines weiteren Positionsmagnetelements 43, bei dem die mittleren Positionsmagnete 45 ein größeres Magnetfeld aufweisen verglichen mit den äußeren Positionsmagneten 45. Die Positionsmagnete 45 der beweglichen Einheit 10 weisen also unterschiedliche Magnetfeldstärken auf. Zur besseren Unterscheidung sind die S-Pole in Fig. 9 ebenfalls schraffiert dargestellt. In einem nicht gezeigten Ausführungsbeispiel kann vorgesehen sein, dass die mittleren Positionsmagnete 45 ein kleineres Magnetfeld aufweisen verglichen mit den äußeren Positionsmagneten 45. Auch in diesem Fall weisen die Positionsmagnete 45 der beweglichen Einheit 10 unterschiedliche Magnetfeldstärken auf. Insbesondere weisen also Positionsmagnete 45 am vorderen Ende 14 beziehungsweise am hinteren Ende 15 der beweglichen Einheit 10 eine andere Magnetfeldstärke auf als Positionsmagnete 45 zwischen dem vorderen Ende 14 und dem hinteren Ende 15.

Dies ermöglicht, mittels des Magnetsensorelements 44 das vordere Ende 14 beziehungsweise das hintere Ende 15 der beweglichen Einheit 10 zu erkennen.

Die unterschiedliche Magnetfeldstärke kann über eine unterschiedliche Größe, aber auch über eine Materialwahl der Positionsmagnete 45 erreicht werden. Durch diese Ausgestaltung kann eine eindeutige Positionsbestimmung des Läufers 32 erreicht werden.

Die Positionsmagnetelemente 45 der Fig. 8 und 9 sind dabei gleich lang wie der Läufer 32.

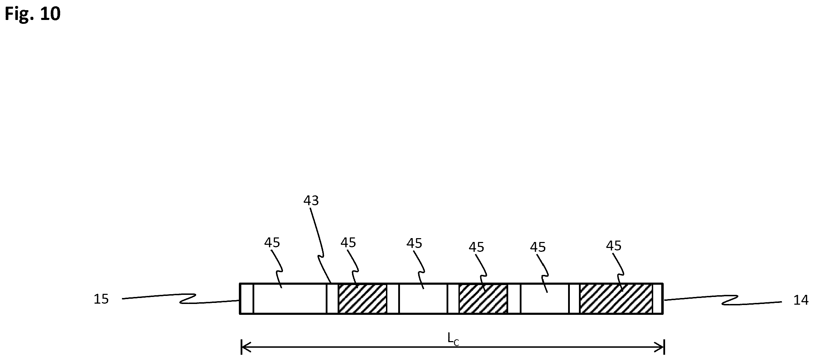

Fig. 10 zeigt eine Ansicht eines weiteren Positionsmagnetelements 43, bei dem die Positionsmagnete 45 am in Bezug auf eine Bewegungsrichtung gesehen vorderen Ende 14 beziehungsweise am hinteren Ende 15 der beweglichen Einheit 10 verlängert sind. Zur besseren Unterscheidung sind die S-Pole in Fig. 10 ebenfalls schraffiert dargestellt. Insbesondere kann dabei das Positionsmagnetelement 43 länger sein als der Läufer 10. Auch so ist es möglich, mittels des Magnetsensorelements 44 das vordere Ende 14 beziehungsweise das hintere Ende 15 der beweglichen Einheit 10 zu erkennen. Insbesondere ist also eine Magnetsensorelementlänge $L_C$ größer als die Motormodullänge $L_M$. Durch die größeren Positionsmagnete 45 wird ein anderes Magnetvektorfeld erzeugt. Dieses kann durch die Messung mit den Magnetfeldsensoren dann unterscheidbar von den geometrisch anderen (kürzeren) Positionsmagneten 45 sein. Dabei kann die Anzahl der unterschiedlichen Positionsmagnete 45 beliebig sein und auch die Position der unterscheidbaren Positionsmagnete 45 innerhalb des Positionsmagnetelements 43 kann beliebig gewählt sein. Beispielsweise kann auch der zweite Positionsmagnet 45 unterschiedlich sein, oder der dritte etc.

Die in den Fig. 8 bis 10 gezeigten Ausgestaltungen können insbesondere deshalb vorteilhaft sein, da für die Positionsmagnete 45 ein geringeres Magnetfeld ausreichend ist verglichen mit den Magneten 35 des Läufers 32 und so gegebenenfalls Herstellungskosten eingespart werden können.

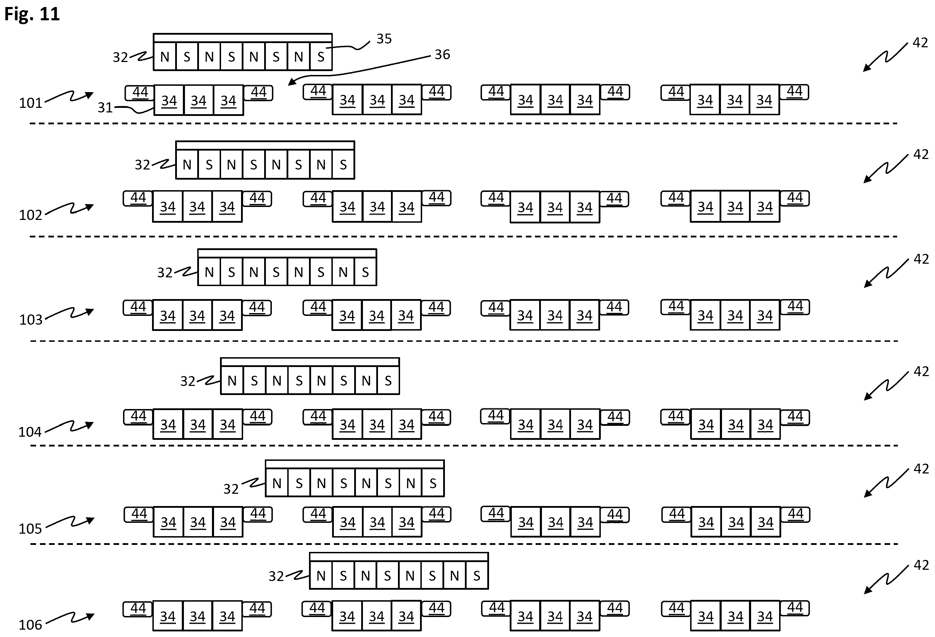

Fig. 11 zeigt eine erste Ansicht 101, eine zweite Ansicht 102, eine dritte Ansicht 103, eine vierte Ansicht 104, eine fünfte Ansicht 105 und eine sechste Ansicht 106 eines Linearmotorschemas 42 eines Linearmotors 30 eines linearen Transportsystems 1, das dem Linearmotorschema 42 der Fig. 5 entspricht, sofern im Folgenden keine Unterschiede beschrieben sind. Unterhalb der Motormodule 33 und damit in dieser Darstellung von den Motormodulen 33 verdeckt ist analog zu Fig. 6 und 7 ein Magnetsensorelement 44 angeordnet. Das Magnetsensorelement 44 überragt das jeweilige Motormodul 33. Dadurch ist das Motormodulelement 37 in Bewegungsrichtung des Läufers 32 vergrößert. Dadurch kann eine genauere Positionsbestimmung des Läufers 32 erfolgen, da insbesondere in der fünften Ansicht 105 und in der sechsten Ansicht 106 jeweils Magnetfeldsensoren unterschiedlicher Magnetsensorelemente 44 das Magnetfeld 40 des Läufers 32 beziehungsweise der Magnete 35 detektieren können.

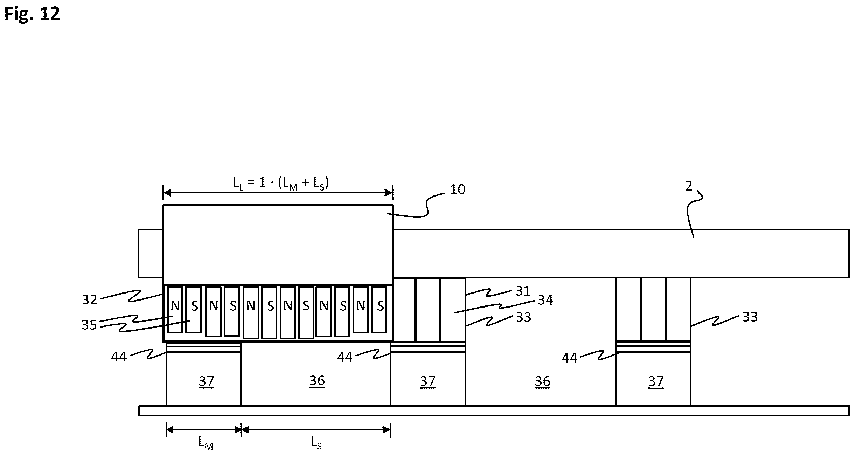

Fig. 12 zeigt eine Seitenansicht eines weiteren linearen Transportsystems 1, das dem linearen Transportsystem der Fig. 1 bis 5 entspricht, sofern im Folgenden keine Unterschiede beschrieben sind. Dabei ist einerseits die Spaltlänge $L_S$ anders als im Ausführungsbeispiel der Fig. 1 bis 5 und andererseits unterscheiden sich die Magnete 35. Beide Unterschiede können auch einzeln vorgesehen werden.

Die Spaltlänge $L_S$ ist ein Vielfaches der Motormodullänge $L_M$. Insbesondere entspricht die Spaltlänge $L_S$ der doppelten Motormodullänge $L_M$. Dadurch wird nur ein Drittel der Motormodule 33 benötigt, verglichen mit einem herkömmlichen linearen Transportsystem 1. Der Läufer 32 weist dabei zwölf Magnete 35 auf, so dass der vergrößerte Spalt 36 durch eine größere Anzahl an Magneten 35 kompensiert wird. Die Magnete 35 beziehungsweise der Läufer 32 können wieder analog zu Fig. 4 auf beiden Seiten des Motormoduls 33 angeordnet sein.

Zusätzlich ist in Fig. 12 dargestellt, dass die Magnete 35 des Läufers 32 in eine Richtung senkrecht zur Führungsschiene 2 unterschiedliche Ausdehnung aufweisen. Anhand der unterschiedlichen Ausdehnung der Magnete 35 können Rückschlüsse auf die Läuferposition gezogen werden. Insbesondere kann durch die unterschiedliche Ausdehnung ein von einem Magnetsensorelement 44 ermitteltes Magnetfeld je nach Läuferposition unterschiedlich sein und so eine Positionsbestimmung möglich werden. Insbesondere kann vorgesehen sein, dass die Ausdehnung der Magnete 35 dazu führt, dass die Magnete 35 auch außerhalb einer Überdeckung mit den Antriebsspulen 34 angeordnet sind, so dass Fahreigenschaften möglichst wenig beeinflusst werden.

In einem Ausführungsbeispiel weisen die Magnete 35 aufgrund der unterschiedlichen Ausdehnung senkrecht zur Führungsschiene 2 eine unterschiedliche relative Position zum Magnetsensorelement 44 auf. Dies kann beispielsweise dadurch erreicht werden, dass eine unterschiedliche Überlappung mit dem Magnetsensorelement 44 vorgesehen ist. Dies ermöglicht eine besonders genaue Positionsbestimmung. Alternativ zum Magnetsensorelement 44 können auch einzelne Magnetsensoren, insbesondere Hall-Sensoren oder 3D-Hall-Sensoren angeordnet sein. Mit einem geeigneten Magnetfeldsensor, beispielsweise einem 3D-Hall-Sensor kann insbesondere senkrecht zur Führungsschiene 2 ein Unterschied im Magnetfeld zwischen den verschiedenen ausgeführten Magneten 35 gemessen werden. Somit ist es auch möglich, die absolute Position eines Läufers 32 eineindeutig zu bestimmen und zu identifizieren (analog zu der fünften Ansicht 105 beziehungsweise der sechsten Ansicht 106 der Fig. 5). In Fig 12 sind nur Magnete 35 mit drei verschiedenen Längen gezeigt. Selbstverständlich kann es auch mehr als drei oder nur zwei unterschiedliche geometrische Ausführungen geben.

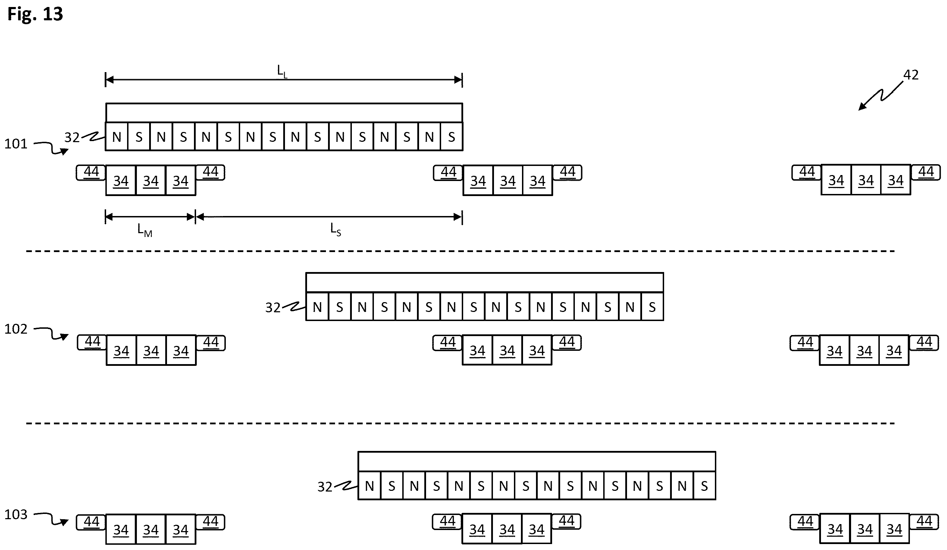

Fig. 13 zeigt eine erste Ansicht 101, eine zweite Ansicht 102 und eine dritte Ansicht 103 eines Linearmotorschemas 42 eines Linearmotors 30 eines weiteren linearen Transportsystems 1, das dem Linearmotorschema 42 der Fig. 5 entspricht, sofern im Folgenden keine Unterschiede beschrieben sind. In diesem Ausführungsbeispiel entspricht die Spaltlänge $L_S$ der dreifachen Motormodullänge $L_M$. In diesem Fall wird ein Viertel der Motormodule 33 benötigt, verglichen mit einem herkömmlichen linearen Transportsystem. In dieser Ausgestaltung kann vorgesehen sein, dass der Läufer 32 sechzehn Magnete 35 aufweist, so dass der vergrößerte Spalt 36 ebenfalls durch eine größere Anzahl an Magneten 35 kompensiert wird. Dadurch kann ein besonders kostengünstiges und ressourcenschonendes lineares Transportsystem 1 bereitgestellt werden.

Auch im Ausführungsbeispiel der Fig. 13 sind die Magnetsensorelemente 44 länger als die Motormodule 33. Dies kann analog zum Linearmotorschema 42 der Fig. 11 vorgesehen sein. Ferner kann sowohl in der Ausgestaltung der Fig. 11 als auch in der Ausgestaltung der Fig. 13 vorgesehen sein, dass innerhalb des Spalts 36 ebenfalls Magnetsensoren beziehungsweise Magnetsensorelemente 44 vorgesehen sind, um eine genauere Positionsbestimmung zu erreichen. Insbesondere kann jeweils auch der komplette Spalt 36 mit Magnetsensoren beziehungsweise Magnetsensorelementen 44 ausgestattet sein. Insbesondere können die Magnetsensorelemente 44 die Motormodule 33 auf beiden Seiten um den doppelten Abstand $A_M$ zweier Magnetmittelpunkte überragen.

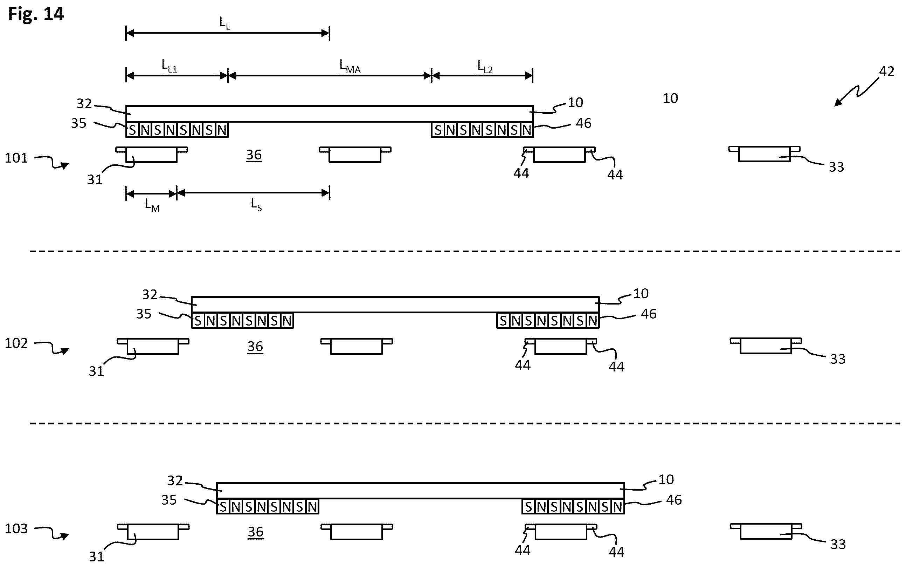

Fig. 14 zeigt eine erste Ansicht 101, eine zweite Ansicht 102 und eine dritte Ansicht 103 eines Linearmotorschemas 42 eines Linearmotors 30 eines weiteren linearen Transportsystems 1, das dem Linearmotorschema 42 der Fig. 13 entspricht, sofern im Folgenden keine Unterschiede beschrieben sind. Die einzelnen Antriebsspulen 34 in den Statoren 31 der Motormodule 33 sind hier nicht dargestellt. Die Magnete 35 des Läufers 32 sind in zwei Magnetelementen 46 angeordnet. In jedem der Magnetelemente 46 sind jeweils mehrere Magnete 35 angeordnet, im Ausführungsbeispiel der Fig. 14 jeweils acht Magnete 35. Es kann jedoch auch eine andere Zahl an Magneten 35 pro Magnetelement 46 vorgesehen sein. Die Läuferlänge $L_L$ ist eine Summe von Magnetelementlängen $L_{L1}$, $L_{L2}$ der Magnetelemente 46. Eines der Magnetelemente 46 weist eine erste Magnetelementlänge $L_{L1}$ auf, das andere Magnetelement 46 eine zweite Magnetelementlänge $L_{L2}$. Dabei können die Magnetelementlängen $L_{L1}$, $L_{L2}$ identisch oder unterschiedlich sein. Die Magnetelemente 46 sind beabstandet voneinander angeordnet. Ein Magnetelementabstand $L_{MA}$ kann insbesondere der Läuferlänge $L_L$ entsprechen. Somit ergibt sich für das bewegliche Element 10 in der Ausführung gemäß der Fig. 14 eine Gesamtlänge aus der Summe von erster Magnetelementlänge $L_{L1}$, Magnetelementabstand $L_{MA}$ und zweiter Magnetelementlänge $L_{L2}$. Durch die Anordnung der Magnete 35 in zwei Magnetelementen 46 wird eine flexiblere Anordnung des linearen Transportsystems 1 möglich. Die Spaltlänge $L_S$ kann in diesem Ausführungsbeispiel wieder der dreifachen Motormodullänge $L_M$ entsprechen. Die Läuferlänge $L_L$ kann die Summe aus Spaltlänge $L_S$ und Motormodullänge $L_M$ sein, wobei die Magnetelementlängen $L_{L1}$, $L_{L2}$ jeweils der halben Läuferlänge $L_L$ entsprechen.

Auch in diesem Ausführungsbeispiel ist es möglich, die Magnetsensorelemente 44 länger als die Motormodule 33 auszugestalten, um eine Positionsmessung zu verbessern, wie beispielsweise im Zusammenhang mit Fig. 13 erläutert. Alternativ oder zusätzlich kann vorgesehen werden, Positionsmagnete 45 auch im Bereich zwischen Magnetelementen 46 vorzusehen, um die Genauigkeit der Positionsbestimmung zu verbessern.

Es kann vorgesehen sein, dass in bestimmten Bereichen des linearen Transportsystems 1 eine erhöhte Antriebskraft zur Verfügung gestellt werden soll. Dies kann insbesondere dadurch erreicht werden, dass die Anzahl der Antriebsspulen 34 in diesen Bereichen erhöht wird.

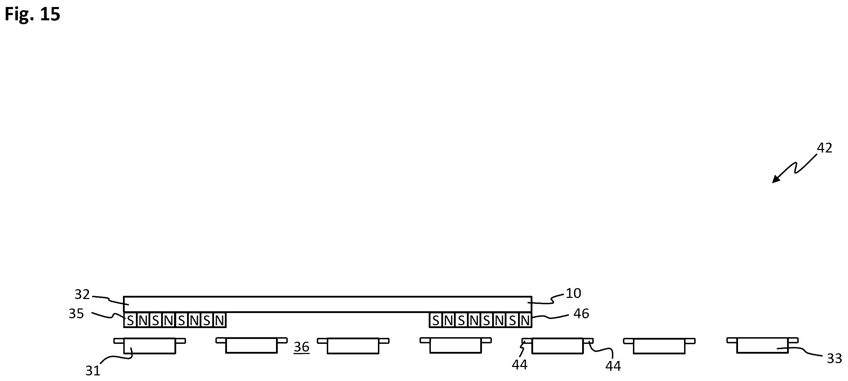

Fig. 15 zeigt ein Linearmotorschema 42 eines Linearmotors 30 eines weiteren linearen Transportsystems 1, das dem Linearmotorschema 42 der Fig. 14 entspricht, sofern im Folgenden keine Unterschiede beschrieben sind. Zwischen den in Fig. 14 gezeigten Motormodulen 33 ist jeweils ein weiteres Motormodul 33 angeordnet. Dadurch sind nicht wie in Fig. 14 vier der Magnete 35 im Bereich der Motormodule 33 angeordnet, sondern acht der Magnete 35, so dass durch diese Anordnung eine Antriebskraft verdoppelt werden kann. Dabei kann vorgesehen werden, dass das lineare Transportsystem 1 einen ersten Bereich mit dem Linearmotorschema 42 der Fig. 14 und einen zweiten Bereich mit dem Linearmotorschema 42 der Fig. 15 aufweist. Ein Wechsel zwischen dem ersten Bereich und dem zweiten Bereich kann an einer Stelle des linearen Transportsystems 1 erfolgen, an dem ein Ruck oder eine Rastung einen geringen Einfluss hat. Beispielsweise kann ein Transport der beweglichen Einheit 10 im ersten Bereich und eine Bearbeitung eines auf der beweglichen Einheit 10 angeordneten Objekts im zweiten Bereich erfolgen, so dass im zweiten Bereich eine größere Antriebskraft zur Verfügung steht, die bei der Bearbeitung des Objekts nötig sein kann. Innerhalb der Bereiche kann die bewegliche Einheit 10 jeweils konstant bewegt werden und nur am Übergang zwischen den Bereichen tritt aufgrund der unterschiedlichen Spalte 36 beziehungsweise Spaltlängen $L_S$ gegebenenfalls ein Ruck auf. Dies kann an dieser Stelle unproblematischer sein als während einer Bearbeitung des Objekts.

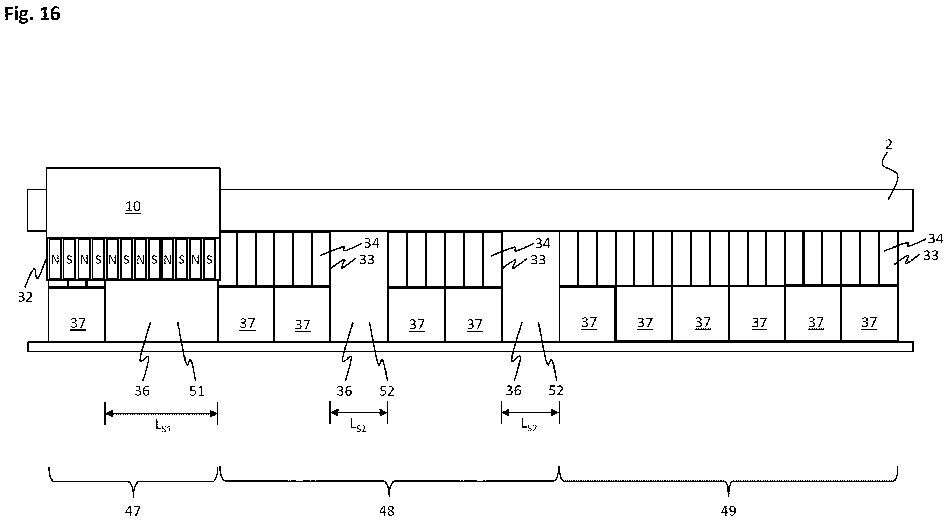

Fig. 16 zeigt eine Seitenansicht eines weiteren linearen Transportsystems 1, das dem linearen Transportsystem 1 der Fig. 6 entspricht, sofern im Folgenden keine Unterschiede beschrieben sind. Wie im Ausführungsbeispiel der Fig. 12 weist der Läufer 32 zwölf Magnete 35 auf. In einem ersten Bereich 47 ist der Spalt 36 ein erster Spalt 51 und die Spaltlänge $L_S$ eine erste Spaltlänge $L_{S1}$. Die erste Spaltlänge $L_{S1}$ ist dabei die doppelte Motormodullänge $L_M$. In einem zweiten Bereich 48 ist zwischen den Motormodulen 33 ein zweiter Spalt 52 angeordnet. Der zweite Spalt 52 weist eine zweite Spaltlänge $L_{S2}$ auf. Die zweite Spaltlänge $L_{S2}$ ist dabei die einfache Motormodullänge $L_M$. Die erste Spaltlänge $L_{S1}$ und die zweite Spaltlänge $L_{S2}$ sind also unterschiedlich. Dies ermöglicht beispielsweise, dass im ersten Bereich 47 und im zweiten Bereich 48 unterschiedliche Antriebsmagnetfelder erzeugt werden, die sich insbesondere hinsichtlich einer Magnetfeldstärke unterscheiden können. Dadurch kann ein lineares Transportsystem 1 bereitgestellt werden, bei dem beispielsweise im zweiten Bereich 48 ein vergrößertes Antriebsmagnetfeld und damit eine größere Antriebskraft bereitgestellt werden kann verglichen mit dem ersten Bereich 47. Der erste Bereich 47 kann dann beispielsweise für einen Transport geeignet sein und das Antriebsmagnetfeld im ersten Bereich 47 für einen Transport ausreichen, während im zweiten Bereich 48 eine Bearbeitung und/oder eine Beschleunigung eines auf der beweglichen Einheit 10 angeordneten Objekts ein vergrößertes Antriebsmagnetfeld erfordert. Mit dieser Ausgestaltung können also immer noch Motormodule 33 eingespart werden und trotzdem in Teilbereichen des linearen Transportsystems 1 ein vergrößertes Antriebsmagnetfeld bereitgestellt werden. In Fig. 16 ist ferner ein dritter Bereich 49 gezeigt, in dem zwischen den Motormodulen 33 gar kein Spalt 36 mehr vorgesehen ist. Dadurch kann im dritten Bereich 49 ein weiter vergrößertes Antriebsmagnetfeld beziehungsweise eine weiter vergrößerte Antriebskraft bereitgestellt werden. In jedem der Bereiche 47, 48, 49 bleibt die Überdeckung der Magneten 35 zu den Motormodulen 33 gleich, so dass es keine größere Rastung gibt. Rastung tritt also nur am Übergang zwischen den Bereichen 47, 48, 49 auf.

Ferner ist es auch möglich, hier jedoch nicht gezeigt, die Kraft auf einen Läufer 32 zu erhöhen, indem mehrere Motormodule 33 bezogen auf die Richtung der Führungsschiene 2 nebeneinander angeordnet werden. Dabei können die Motormodule 33 parallel zu weiteren Motormodulen 33 oder parallel zu einem Spalt 36 angeordnet sein. Die Magnete 35 des Läufers 32 können quer zu Fahrtrichtung, also quer zur Führungsschiene 2, länger sein, so dass diese mit den parallelen Motormodulen 33 eine vergrößerte Kraft erzeugen können. Alternativ kann der Läufer 32 auch weitere zusätzliche Magnete analog zu den Magneten 35 aufweisen, die parallel oder versetzt parallel angebracht sind.

Im Ausführungsbeispiel der Fig. 16 entspricht die erste Spaltlänge $L_{S1}$ einem n-fachen, hier dem Doppelten, der Motormodullänge $L_M$. Die zweite Spaltlänge $L_{S2}$ entspricht dem um eins verringerten n-fachen, hier also genau, der Motormodullänge $L_M$. Selbstverständlich können hier auch andere Vielfache als die in Fig. 16 gewählten n-fachen gewählt werden. Beispielsweise kann die erste Spaltlänge $L_{S1}$ einem Dreifachen der Motormodullänge $L_M$ entsprechen. Die zweite Spaltlänge $L_{S2}$ kann dann entspricht dem Doppelten der Motormodullänge $L_M$ entsprechen.

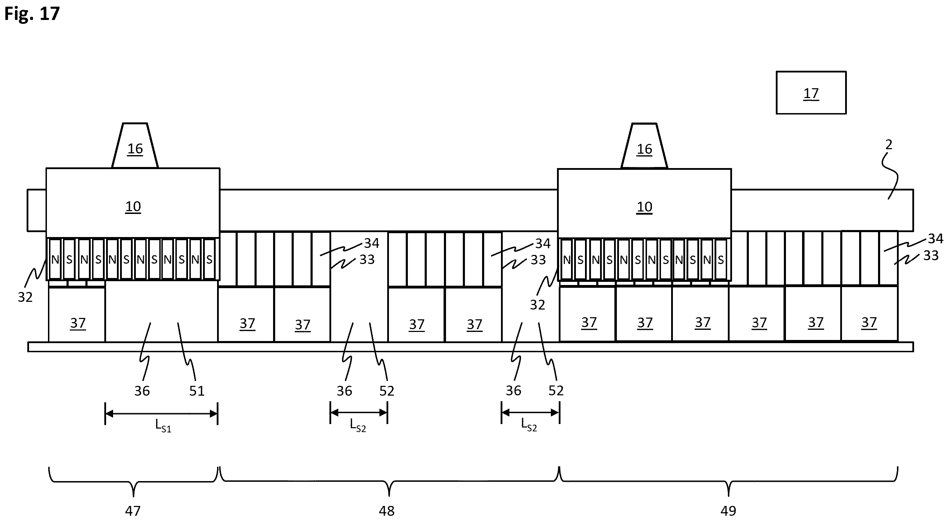

Fig. 17 zeigt eine Seitenansicht eines linearen Transportsystems 1 gemäß der Fig. 16. Im Unterschied zur Darstellung in Fig. 16 sind in Fig. 17 zwei bewegliche Einheiten 10 dargestellt, auf denen jeweils ein Objekt 16 angeordnet ist. Eine der beweglichen Einheiten 10 befindet sich dabei im ersten Bereich 47, die andere bewegliche Einheit 10 im dritten Bereich 49. Eine Objektbearbeitungsstation 17 oberhalb des dritten Bereichs 49 kann zu einer Bearbeitung des Objekts 16 dienen. Dabei kann für die Bearbeitung des Objekts 16 eine erhöhte Kraft nötig sein, beispielsweise wenn mit der Objektbearbeitungsstation 17 eine zerspanende Bearbeitung des Objekts 16 durchgeführt wird.

Der im Zusammenhang mit den Fig. 16 und 17 erläuterte erste Bereich 47, der im Zusammenhang mit den Fig. 16 und 17 erläuterte zweite Bereich 48 und der im Zusammenhang mit den Fig. 16 und 17 erläuterte dritte Bereich 49 kann auch in der im Zusammenhang mit den Fig. 14 und 15 erläuterten beabstandeten Magnetelementen 46 des Läufers 32 eingesetzt werden.

In einem (nicht gezeigten) Ausführungsbeispiel entspricht die erste Spaltlänge $L_{S1}$ einem n-fachen der Motormodullänge $L_M$. Die zweite Spaltlänge $L_{S2}$ entspricht dem um zwei verringerten n-fachen der Motormodullänge $L_M$. Dadurch ergeben sich jeweils Einsparungen bei der Anzahl der Motormodule 33 bei gleichzeitiger Erhöhung der Antriebsmagnetfelder im zweiten Bereich 48.

In einem Ausführungsbeispiel entspricht die erste Spaltlänge $L_{S1}$ der dreifachen Motormodullänge $L_M$. Die zweite Spaltlänge $L_{S2}$ entspricht der Motormodullänge $L_M$. Dies bedeutet insbesondere, dass die im ersten Bereich 47 vorgesehene erste Spaltlänge $L_{S1}$ zunächst bei einem Aufbau des linearen Transportsystems 1 auch im zweiten Bereich 48 vorgesehen werden kann und anschließend mittig in die ersten Spalte 51 im zweiten Bereich 48 ein weiteres Motormodul 33 platziert wird, so dass sich die zweite Spaltlänge $L_{S2}$ ausbildet. So kann ein einfacher Aufbau des linearen Transportsystems 1 erreicht werden.

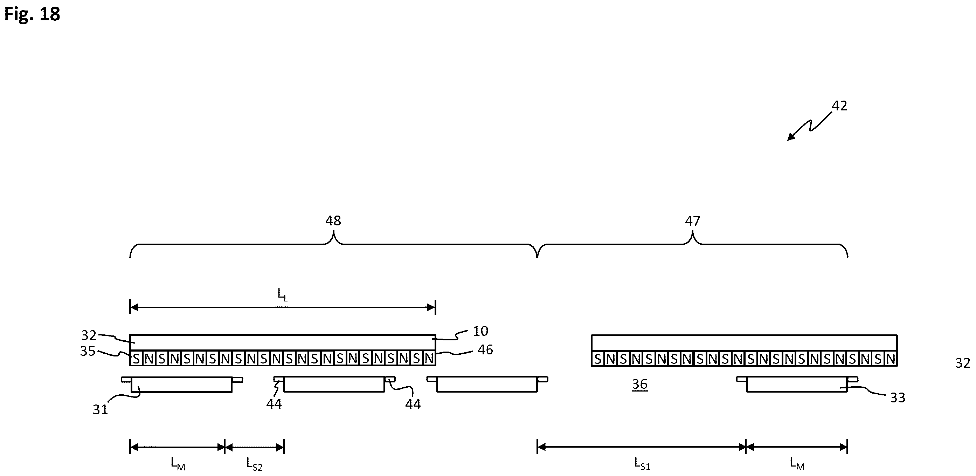

Fig. 18 zeigt ein Linearmotorschema 42 eines Linearmotors 30 eines weiteren linearen Transportsystems 1, das dem Linearmotorschema 42 der Fig. 14 und 15 entspricht, sofern im Folgenden keine Unterschiede beschrieben sind. Auch hier ist ein erster Bereich 47 mit einer ersten Spaltlänge $L_{S1}$ und ein zweiter Bereich mit einer zweiten Spaltlänge $L_{S2}$ vorgesehen. Der Läufer 32 weist vierundzwanzig Magnete 35 auf. Die Motormodule 33 weisen sechs, hier nicht dargestellte Antriebsspulen 34 auf. Dabei entspricht die Läuferlänge $L_L$ dem vierundzwanzigfachen Abstand $A_M$ zweier Magnetmittelpunkte. Die Motormodullänge entspricht dem sechsfachen Abstand $A_S$ zweier Antriebsspulenmittelpunkte. Im ersten Bereich 47 entspricht die erste Spaltlänge $L_{S1}$ der doppelten Motormodullänge $L_M$. Dadurch ergibt sich für die Läuferlänge $L_L$ die Relation:

$$L_L = L_M + L_{S1}$$

Im zweiten Bereich 48 entspricht die zweite Spaltlänge $L_{S2}$ der halben Motormodullänge $L_M$. Dadurch ergibt sich für die Läuferlänge $L_L$ die Relation:

$$L_L = 2 (L_M + L_{S2})$$

Sowohl im ersten Bereich 47 als auch im zweiten Bereich 48 erfüllt das lineare Transportsystem 1 also die erfindungsgemäße Relation, die vorgibt, dass die Läuferlänge $L_L$ einem n-fachen der Summe aus Motormodullänge $L_M$ und Spaltlänge $L_S$ entspricht.

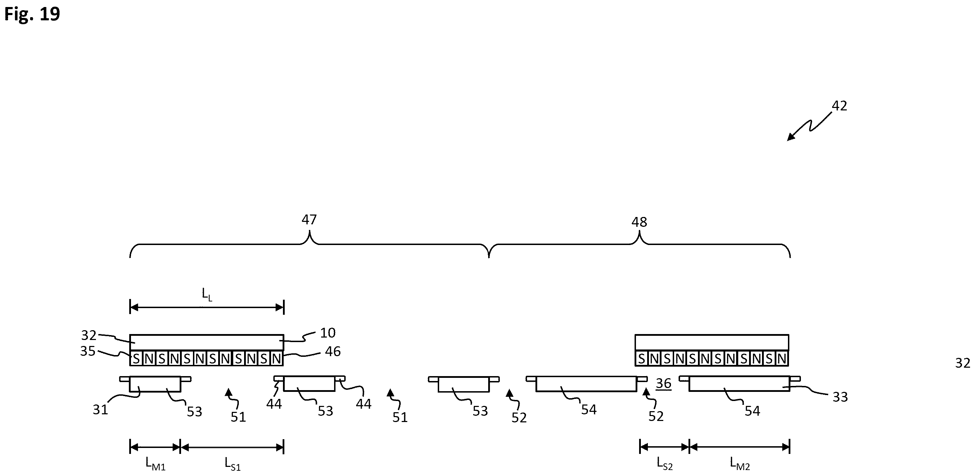

Fig. 19 zeigt ein Linearmotorschema 42 eines Linearmotors 30 eines weiteren linearen Transportsystems 1. In einem ersten Bereich 47 ist ein erstes Motormodul 53 angeordnet, das eine erste Motormodullänge $L_{M1}$ aufweist. Zwischen den ersten Motormodulen 53 ist ein erster Spalt 51 mit einer ersten Spaltlänge $L_{S1}$ ausgebildet. In einem zweiten Bereich 48 ist ein zweites Motormodul 54 angeordnet, das eine zweite Motormodullänge $L_{M2}$ aufweist. Zwischen den zweiten Motormodulen 54 ist ein zweiter Spalt 52 mit einer zweiten Spaltlänge $L_{S2}$ ausgebildet. Die erste Spaltlänge $L_{S1}$ entspricht der doppelten ersten Motormodullänge $L_{M1}$. Die zweite Spaltlänge $L_{S2}$ entspricht der halben zweiten Motormodullänge $L_{M2}$. Die zweite Motormodullänge $L_{M2}$ ist doppelt so groß wie die erste Motormodullänge $L_{M1}$. Dadurch ergibt sich für die Läuferlänge $L_L$:

$$L_L = L_{M1} + L_{S1} = L_{M2} + L_{S2}$$

Die erfindungsgemäße Relation, die vorgibt, dass die Läuferlänge $L_L$ einem n-fachen der Summe aus Motormodullänge $L_M$ und Spaltlänge $L_S$ entspricht, ist also sowohl im ersten Bereich als auch im zweiten Bereich erfüllt. Allgemein kann vorgesehen sein, dass für die Läuferlänge $L_L$

$$L_L = n (L_{M1} + L_{S1}) = m (L_{M2} + L_{S2})$$

gilt, wobei n und m natürliche Zahlen sind.

In diesem Ausführungsbeispiel können also im ersten Bereich 47 kürzere und damit kostengünstigere Motormodule 33 vorgesehen werden, während im zweiten Bereich 48 längere Motormodule 33 geeignet sind, eine erhöhte Antriebskraft bereitzustellen.

Es sind ferner weitere Ausgestaltungen des linearen Transportsystems 1 denkbar, bei denen jeweils die erfindungsgemäße Relation, die vorgibt, dass die Läuferlänge $L_L$ einem n-fachen der Summe aus Motormodullänge $L_M$ und Spaltlänge $L_S$ entspricht, erfüllt sind.

Neben den gezeigten Ausgestaltungen, bei denen die Führungsschiene 2 linear ist, kann ferner vorgesehen werden, die Motormodule 33 mit einer Spaltlänge $L_S$ zwischen den Motormodulen 33 derart anzuordnen, dass die bewegliche Einheit 10 entlang einer gebogenen Führungsschiene 2 eine Kurve durchfahren kann. Beispielsweise wären so horizontale, aber auch vertikale Kurven mit einheitlichen, nahezu rechteckigen Motormodulen 33 möglich. Die Motormodulelemente 37 könnten dann beabstandet zueinander angeordnet sein und jeweils den Läufer 32 antreiben.

Bei einer horizontalen Kurve läge der Kurvenradius parallel zu einer Luftspaltebene zwischen Motormodulen 33 und Läufer 32 und die Bedingung $L_L = n (L_M + L_S)$ wird insbesondere für die Mitte der Antriebsspulen 35 des Motormoduls 33 und einen mittleren Radius eingehalten.

Bei einer vertikalen Kurve liegt der Spalt 36 zwischen den Motormodulen 33 auf einer Sekante des Kreisbogens. Der Kurvenradius ist senkrecht zum Spalt 36 zwischen den Motormodulen 33. Der Kreisbogen wird durch mehrere geraden Sekanten aus wiederum einheitlichen rechteckigen Motormodulen 33 gebildet. Die Bedingung $L_L = n (L_M + L_S)$ wird auf der Sekante eingehalten. Für einen großen Kurvenradius und vergleichsweise kurze Motormodule 33 und kleine Spaltlängen $L_S$ kann die Abweichung zwischen Kreisbogen und Sekante aber vernachlässigbar klein sein.

Bezugszeichenliste

| | |
|---|---|
| 1 | lineares Transportsystem |
| 2 | Führungsschiene |
| 3 | Steuereinheit |
| 4 | Datenleitung |
| 5 | Laufflächen |
| 10 | bewegliche Einheit |
| 11 | Gehäuse |
| 12 | Schenkels |
| 13 | Laufrolle |
| 14 | vorderes Ende |
| 15 | hinteres Ende |
| 16 | Objekt |
| 17 | Objektbearbeitungsstation |
| 30 | Linearmotor |
| 31 | Stator |
| 32 | Läufer |
| 33 | Motormodul |
| 34 | Antriebsspulen |
| 35 | Magnet |
| 36 | Spalt |
| 37 | Motormodulelement |
| 38 | Spulenkern |
| 39 | Anschluss |
| 40 | Magnetfeld |
| 41 | Spulenmagnetfeld |
| 42 | Linearmotorschema |
| 43 | Positionsmagnetelement |
| 44 | Magnetsensorelement |
| 45 | Positionsmagnet |
| 46 | Magnetelement |
| 47 | erster Bereich |
| 48 | zweiter Bereich |
| 49 | dritter Bereich |

| | |
|---|---|
| 51 | erster Spalt |
| 52 | zweiter Spalt |
| 53 | erstes Motormodul |
| 54 | zweites Motormodul |
| 101 | erste Ansicht |
| 102 | zweite Ansicht |
| 103 | dritte Ansicht |
| 104 | vierte Ansicht |
| 105 | fünfte Ansicht |
| 106 | sechste Ansicht |
| $A_M$ | Abstand zweier Magnetmittelpunkte |
| $A_S$ | Abstand zweier Antriebsspulenmittelpunkte |
| $L_A$ | Antriebsspulenlänge |
| $L_B$ | Magnetlänge |
| $L_C$ | Magnetsensorelementlänge |
| $L_L$ | Läuferlänge |
| $L_{L1}$ | erste Magnetelementlänge |
| $L_{L2}$ | zweite Magnetelementlänge |
| $L_{MA}$ | Magnetelementabstand |
| $L_M$ | Motormodullänge |
| $L_{M1}$ | erste Motormodullänge |
| $L_{M2}$ | zweite Motormodullänge |
| $L_S$ | Spaltlänge |
| $L_{S1}$ | erste Spaltlänge |
| $L_{S2}$ | zweite Spaltlänge |

**Patentansprüche**

1. Lineares Transportsystem (1) mit einer beweglichen Einheit (10), einer Führungsschiene (2) zum Führen der beweglichen Einheit (10), einem Linearmotor (30) zum Antreiben der beweglichen Einheit (10) entlang der Führungsschiene (2) und einer Steuereinheit (3),

   wobei der Linearmotor (30) einen Stator (31) und einen Läufer (32) umfasst,
   wobei der Stator (31) mehrere entlang der Führungsschiene (2) stationär angeordnete Motormodule (33) aufweist, welche jeweils mehrere Antriebsspulen (34) aufweisen,
   wobei der Läufer (32) an der beweglichen Einheit (10) angeordnet ist und mehrere Magnete (35) umfasst,
   wobei in einem ersten Bereich zwischen zwei der Motormodule (33) ein erster Spalt (51) mit einer ersten Spaltlänge ($L_{S1}$) angeordnet ist,
   wobei in einem zweiten Bereich zwischen zwei der Motormodule (33) ein zweiter Spalt (52) mit einer zweiten Spaltlänge ($L_{S2}$) angeordnet ist,
   wobei die erste Spaltlänge ($L_{S1}$) und die zweite Spaltlänge ($L_{S2}$) unterschiedlich sind,
   wobei die Motormodule (33) in Motormodulelementen (37) angeordnet sind,
   wobei die Motormodulelemente (37) ein Magnetsensorelement (44) aufweisen, wobei das Magnetsensorelement (44) eingerichtet ist, ein Magnetfeld der Magnete (35) des Läufers (32) und/oder ein Magnetfeld von Positionsmagneten (45) der beweglichen Einheit (10) zu messen, um eine Läuferposition zu bestimmen,
   wobei die Steuereinheit (3) eingerichtet ist, Steuerbefehle an die Motormodule (33) auszugeben, wobei die Motormodule (33) eingerichtet sind, Antriebsspulen (34) anhand der Steuerbefehle zu bestromen, und
   wobei die Steuereinheit (3) ferner eingerichtet ist, Steuerbefehle derart auszugeben, dass die bewegliche Einheit (10) eine vorgegebene Bewegung entlang der Führungsschiene (1) ausführt, um anhand der vorgegebenen Bewegung einbaubedingte Abweichungen von Spaltlängen ($L_S$) zu erkennen und für die Ausgabe weiterer Steuerbefehle zu berücksichtigen.

2. Lineares Transportsystem (1) nach Anspruch 1, wobei das Magnetsensorelement (44) eine Magnetsensorelementlänge ($L_C$) aufweist, wobei die Magnetsensorelementlänge ($L_C$) größer ist als die Motormodullänge ($L_M$).

3. Lineares Transportsystem (1) nach Anspruch 1 oder 2, wobei die Motormodule (33) eine Motormodullänge ($L_M$) aufweisen, wobei die Motormodullänge ($L_M$) einem Abstand ($A_S$) zweier Antriebsspulenmittelpunkte multipliziert mit einer Anzahl der Antrieunbsspulen (34) pro Motormodul (33) entspricht, wobei der Läufer (32) eine Läuferlänge ($L_L$) aufweist, wobei die Läuferlänge ($L_L$) einem Abstand ($A_M$) zweier Magnetmittelpunkte multipliziert mit einer Anzahl der Magnete (35) des Läufers (32) entspricht, und wobei die Läuferlänge ($L_L$) einem n-fachen der Summe aus Motormodullänge ($L_M$) und Spaltlänge ($L_S$) entspricht.

4. Lineares Transportsystem (1) nach Anspruch 3, wobei der Abstand ($A_S$) zweier Antriebsspulenmittelpunkte ungleich dem Abstand ($A_M$) zweier Magnetmittelpunkte ist.

5. Lineares Transportsystem (1) nach Anspruch 3 oder 4, wobei die Spaltlänge ($L_S$) mindestens der Motormodullänge ($L_M$) entspricht.

6. Lineares Transportsystem (1) nach Anspruch 5, wobei die Spaltlänge ($L_S$) ein Vielfaches der Motormodullänge ($L_M$) ist.

7. Lineares Transportsystem (1) nach einem der Ansprüche 1 bis 6, wobei die Magnete (35) des Läufers (32) in zwei Magnetelementen (46) angeordnet sind, wobei die Magnetelemente (46) jeweils mehrere Magnete (35) aufweisen, wobei die Läuferlänge ($L_L$) eine Summe von Magnetelementlängen ($L_{L1}$, $L_{L2}$) der Magnetelemente (46) ist, und wobei die Magnetelemente (46) beabstandet voneinander angeordnet sind.

8. Lineares Transportsystem (1) nach einem der Ansprüche 1 bis 7, wobei die Magnete (35) des Läufers (32) in eine Richtung senkrecht zur Führungsschiene (2) unterschiedliche Ausdehnung aufweisen und wobei anhand der unterschiedlichen Ausdehnung der Magnete (35) Rückschlüsse auf die Läuferposition gezogen werden können.

9. Lineares Transportsystem (1) nach einem der Ansprüche 1 bis 7, wobei die Positionsmagnete (45) der beweglichen Einheit (10) unterschiedliche Magnetfeldstärken aufweisen.

10. Lineares Transportsystem (1) nach Anspruch 9, wobei die Positionsmagnete (45) an einem in Bezug auf eine Bewegungsrichtung gesehen vorderen Ende (14) und an einem hinteren Ende (15) der beweglichen Einheit (10) eine andere Magnetfeldstärke aufweisen als zwischen dem vorderen Ende (14) und dem hinteren Ende (15) der beweglichen Einheit (10).

Fig. 1

Fig. 2

Fig. 3

Fig. 4

**Fig. 5**

32 — N S N S N S N S · 35

· 36

101 — 31 — 34 34 34 · · 34 34 34 · · 34 34 34 · · 34 34 34 · · 42

- - - - - - - - - - - - - - - - - - - - - - - - - - - - - - - - - - - - - - - - - - - - - - - -

32 — N S N S N S N S

102 — 34 34 34 · · 34 34 34 · · 34 34 34 · · 34 34 34 · · 42

- - - - - - - - - - - - - - - - - - - - - - - - - - - - - - - - - - - - - - - - - - - - - - - -

32 — N S N S N S N S

103 — 34 34 34 · · 34 34 34 · · 34 34 34 · · 34 34 34 · · 42

- - - - - - - - - - - - - - - - - - - - - - - - - - - - - - - - - - - - - - - - - - - - - - - -

32 — N S N S N S N S

104 — 34 34 34 · · 34 34 34 · · 34 34 34 · · 34 34 34 · · 42

- - - - - - - - - - - - - - - - - - - - - - - - - - - - - - - - - - - - - - - - - - - - - - - -

32 — N S N S N S N S

105 — 34 34 34 · · 34 34 34 · · 34 34 34 · · 34 34 34 · · 42

- - - - - - - - - - - - - - - - - - - - - - - - - - - - - - - - - - - - - - - - - - - - - - - -

32 — N S N S N S N S

106 — 34 34 34 · · 34 34 34 · · 34 34 34 · · 34 34 34 · · 42

EP 4 654 460 A2

EP 4 654 460 A2

**Fig. 6**

**Fig. 7**

EP 4 654 460 A2

EP 4 654 460 A2

**Fig. 8**

Fig. 9

Fig. 10

Fig. 11

Fig. 12

Fig. 13

**Fig. 14**

$L_L$

$L_{L1}$   $L_{MA}$   $L_{L2}$

42

32   10   10

35   S N S N S N S N   46

101   S N S N S N S N   36

31   44   44   33

$L_M$   $L_S$

32   10

35   S N S N S N S N   46

102   S N S N S N S N   36

31   44   44   33

32   10

35   S N S N S N S N   46

103   S N S N S N S N   36

31   44   44   33

Fig. 15

**Fig. 16**

Fig. 17

EP 4 654 460 A2

**Fig. 18**

EP 4 654 460 A2

**Fig. 19**

42

47 48

$L_L$

32
35
10
46

S N S N S N S N S N S N

S N S N S N S N S N S N

31 53 51 44 53 44 51 53 52 54 52 36 54 33

$L_{M1}$ $L_{S1}$ $L_{S2}$ $L_{M2}$

32

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012204919 A1